# EUROPEAN PATENT APPLICATION

(11) **EP 4 159 436 A1**
(43) Date of publication of application: **05.04.2023**
(21) Application number: 21812056.6
(22) Date of filing: 26.02.2021
(51) Int. Cl.: B32B 27/18, B32B 27/32, C08J 3/22, C08K 5/42, C08L 23/02, C08L 23/08, C08L 23/26, C08J 5/18

(54) **MASTER BATCH, RESIN COMPOSITION, POLYOLEFIN RESIN FILM, PRODUCTION METHOD THEREFOR, AND LAYERED FILM**

(30) Priority: 28.05.2020 JP 2020093625
(71) Applicant: Takemoto Yushi Kabushiki Kaisha, Gamagori-shi, Aichi 443-8611 (JP)
(72) Inventor: SATO Shumma, Gamagori-shi, Aichi 443-8611 (JP)
(74) Representative: TBK
(86) International application number: PCT/JP2021/007549
(87) International publication number: WO 2021/240931

(57) **Abstract**

The masterbatch includes a non-modified polyolefin resin, a modifier, and an antifogging agent, the modifier is at least one selected from a group consisting of an ethylene vinyl acetate copolymer, an ethylene unsaturated carboxylic acid ester copolymer, and a modified polyolefin resin with an unsaturated acid anhydrate, the antifogging agent is at least one selected from a group consisting of an alkylsulfonic acid alkali metal salt, an alkylarylsulfonic acid alkali metal salt, and an alkylsulfate alkali metal salt, content ratios of the modifier and antifogging agent are respectively 4 to 85 parts by mass and 0.4 to 16.0 parts by mass based on 100 parts by mass of the non-modified polyolefin resin.

## Description

### TECHNICAL FIELD

The present invention relates to a polyolefin-based resin film excellent in transparency and an antifogging property, a method of producing the same, a masterbatch suitable as a raw material for producing the same, a resin composition, and a laminated film.

### BACKGROUND ART

Conventionally, polyolefin-based resin films have been widely used as, for example, packaging materials. Since a non-modified polyolefin resin has a hydrophobic property, when the resin is used to form a molded article, there is a tendency that the molded article has insufficient transparency. Therefore, in order to obtain a polyolefin-based resin film having transparency, a resin composition containing an antifogging agent is used as a molding material. As such antifogging agents, for example, Patent Literature 1 discloses a polyglycerin fatty acid ester, and Patent Literature 2 discloses a monoester of glycerin and a C₈ to C₂₂ fatty acid, a monoester of diglycerin and a C₈ to C₂₂ fatty acid, a polyoxyethylene alkyl amino ether, a monoester of polyoxyethylene alkylaminoether and a C₈ to C₂₂ fatty acid, and a mixture of a monoester and di-ester of polyoxyethylene alkylaminoether and a C₈ to C₂₂ fatty acid. In addition, Patent Literature 3 discloses a glycerin fatty acid ester, a polyglycerin fatty acid ester, a sorbitan fatty acid ester, a polyoxyethylene alkyl ether, a polyoxyethylene sorbitan fatty acid ester, a polyoxyethylene glycerin fatty acid ester, and the like as antifogging agents to be contained in a masterbatch for use in formation of a food packaging film or sheet.

A resin film containing an antifogging agent has been studied in order to solve a problem that, when an article having a water-containing property or having moisture attached to a surface thereof, such as a vegetable, is packaged using a resin film and stored in a low temperature atmosphere, dew condensation occurs on an inner surface of the film, so that fogging due to water droplets occurs, and the packaged article cannot be clearly visually recognized.

### PRIOR ART LITERATURE

### PATENT LITERATURE

Patent Literature 1: JP-A H5-96694
Patent Literature 2: JP-A 2006-231899
Patent Literature 3: JP-A 2018-127533

### SUMMARY OF INVENTION

### TECHNICAL PROBLEMS

When a film containing an antifogging agent is produced, there is a method of subjecting a masterbatch containing an antifogging agent to a film molding as it is, as described in Patent Literature 3. In addition, there is also a production method using plural kinds of masterbatches, for example, a production method using a masterbatch containing an antifogging agent at a high concentration and another masterbatch not containing an antifogging agent in combination. An object of the present invention is to provide a masterbatch and a resin composition which are suitable for these film production methods and lead to a polyolefin-based resin film excellent in transparency and an antifogging property. Another object of the present invention is to provide a method of producing a polyolefin-based resin film in which occurrence of extrusion variation during film formation is suppressed in a film molding by extrusion. Still another object of the present invention is to provide a laminated film which includes a resin layer formed of the above polyolefin-based resin film and is excellent in transparency and an antifogging property. In the present specification, the term "antifogging property" refers to performance in which, after an article having a water-containing property or having moisture attached to a surface thereof is placed and left in an atmosphere at, for example, 10°C or lower in a state of being packaged with a resin film, water droplets are hardly observed on an inner surface of the film, and the article can be well visually recognized through the film.

### SOLUTIONS TO PROBLEMS

As a result of intensive studies, the present inventors have found that a masterbatch formed by combining a non-modified polyolefin resin, a specific modifier, and a specific antifogging agent is suitable as a raw material for producing a polyolefin-based resin film excellent in transparency and an antifogging property.

The present invention is indicated below.

The masterbatch of the present invention includes a non-modified polyolefin resin (hereinafter, also referred to as a "non-modified polyolefin resin (A)"), a modifier (hereinafter, also referred to as a "modifier (B)"), and an antifogging agent (hereinafter, also referred to as an "antifogging agent (C)"), and is characterized in that the modifier (B) is at least one selected from a group consisting of an ethylene vinyl acetate copolymer, an ethylene unsaturated carboxylic acid ester copolymer, and a modified polyolefin resin with an unsaturated acid anhydrate, that the antifogging agent (C) is at least one selected from a group consisting of an alkylsulfonic acid alkali metal salt, an alkylarylsulfonic acid alkali metal salt, and an alkylsulfate alkali metal salt, that a content of the modifier (B) is in a range from 4 to 85 parts by mass based on 100 parts by mass of the non-modified polyolefin resin (A), and that a content of the antifogging agent (C) is in a range from 0.4 to 16.0 parts by mass based on 100 parts by mass of the non-modified polyolefin resin (A).

The resin composition of the present invention is characterized by including the above masterbatch of the present invention.

The production method of a polyolefin-based resin film of the present invention is characterized by subjecting the above resin composition of the present invention to a film molding.

The polyolefin-based resin film of the present invention includes a non-modified polyolefin resin (A), a modifier (B), and an antifogging agent (C), and is characterized in that the modifier (B) is at least one selected from a group consisting of an ethylene vinyl acetate copolymer, an ethylene unsaturated carboxylic acid ester copolymer, and a modified polyolefin resin with an unsaturated acid anhydrate, that the antifogging agent (C) is at least one selected from a group consisting of an alkylsulfonic acid alkali metal salt, an alkylarylsulfonic acid alkali metal salt, and an alkylsulfate alkali metal salt, that a content of the modifier (B) is in a range from 0.4 to 80 parts by mass based on 100 parts by mass of the non-modified polyolefin resin (A), and that a content of the antifogging agent (C) is in a range from 0.03 to 6.00 parts by mass based on 100 parts by mass of the non-modified polyolefin resin (A).

The laminated film of the present invention is characterized by laminating a resin layer consisting of a polyolefin-based resin film and other layers.

### ADVANTAGEOUS EFFECTS OF INVENTION

The masterbatch of the present invention is suitable as a raw material for producing a polyolefin-based resin film excellent in transparency and an antifogging property. Since the resin composition of the present invention contains the masterbatch of the present invention, the resin composition is suitable for producing a polyolefin-based resin film excellent in transparency and an antifogging property. In addition, according to the production method of a polyolefin-based resin film of the present invention using the resin composition of the present invention, occurrence of extrusion variation during film formation is suppressed in a film molding by extrusion, and a film having a uniform configuration can be efficiently obtained. Further, a laminated film of the present invention is excellent in transparency and an antifogging property.

### DESCRIPTION OF EMBODIMENT

The masterbatch of the present invention is an article that has a cylindrical shape, a prismatic shape, a spherical shape, an elliptically spherical shape, or the like and is composed of a thermoplastic resin composition containing a non-modified polyolefin resin (A), a modifier (B), and an antifogging agent (C) at a specific ratio. The masterbatch of the present invention may contain an additive (which will be described later) that is conventionally blended in a known resin product as necessary.

The non-modified polyolefin resin (A) is a resin that does not include a hetero atom or a functional group having a hetero atom, and is a polymer compound composed of only one or two or more of structural units represented by the following general formula (1). 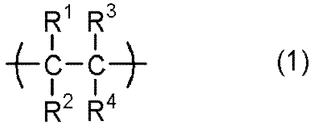 (In the formula, R¹, R², R³ and R⁴ are each independently a hydrogen atom or an alkyl group having 1 to 8 carbon atoms.)

Examples of the non-modified polyolefin resin (A) include a polyethylene composed only of a structural unit in which all of R¹, R², R³ and R⁴ in the general formula (1) are hydrogen atoms; a polypropylene composed only of a structural unit in which R¹, R² and R³ in the general formula (1) are hydrogen atoms and R⁴ is a methyl group; an ethylene α-olefin copolymer composed of a structural unit in which all of R¹, R², R³ and R⁴ in the general formula (1) are hydrogen atoms and a structural unit in which R¹, R² and R³ in the general formula (1) are hydrogen atoms and R⁴ is an alkyl group having 1 to 8 carbon atoms; and the like. Among them, an ethylene α-olefin copolymer is preferable, and, an ethylene α-olefin copolymer containing a structural unit derived from an α-olefin having 3 to 8 carbon atoms is particularly preferable such as an ethylene propylene copolymer, an ethylene 1-butene copolymer, an ethylene 1-hexene copolymer, and an ethylene 1-octene copolymer.

The non-modified polyolefin resin (A) contained in the masterbatch of the present invention may be one type, or two or more types.

The modifier (B) is a component that has excellent compatibility with the non-modified polyolefin resin (A) and improves the retention of the antifogging agent (C) and an additive blended as necessary in a matrix mainly composed of the non-modified polyolefin resin (A). In the present invention, the modifier (B) is at least one selected from an ethylene vinyl acetate copolymer, an ethylene unsaturated carboxylic acid ester copolymer, and a modified polyolefin resin with an unsaturated acid anhydrate (hereinafter, referred to as "acid anhydride-modified polyolefin resin"). The modifier (B) contained in the masterbatch of the present invention may be one type, or two or more types. The modifier (B) is preferably an ethylene vinyl acetate copolymer having a structural unit derived from vinyl acetate in an amount of 5% to 30% by mol, an ethylene unsaturated carboxylic acid ester copolymer, and an acid anhydride-modified polyolefin resin, more preferably an ethylene vinyl acetate copolymer having a structural unit derived from vinyl acetate in an amount of 5% to 30% by mol, and an ethylene unsaturated carboxylic acid ester copolymer, and further preferably an ethylene vinyl acetate copolymer having a structural unit derived from vinyl acetate in an amount of 5% to 30% by mol.

The ethylene unsaturated carboxylic acid ester copolymer is a copolymer composed of a structural unit derived from ethylene and a structural unit derived from an unsaturated carboxylic acid ester. The unsaturated carboxylic acid ester is not particularly limited. Example thereof includes methyl acrylate, ethyl acrylate, propyl acrylate, butyl acrylate, amyl acrylate, hexyl acrylate, heptyl acrylate, octyl acrylate, ethylhexyl acrylate, nonyl acrylate, decanyl acrylate, lauryl acrylate, cetyl acrylate, stearyl acrylate, cyclohexyl acrylate, phenyl acrylate, benzyl acrylate, methyl methacrylate, ethyl methacrylate, propyl methacrylate, butyl methacrylate, amyl methacrylate, hexyl methacrylate, heptyl methacrylate, octyl methacrylate, ethylhexyl methacrylate, nonyl methacrylate, decanyl methacrylate, lauryl methacrylate, cetyl methacrylate, stearyl methacrylate, cyclohexyl methacrylate, phenyl methacrylate, benzyl methacrylate, and the like. The structural unit derived from the unsaturated carboxylic acid ester contained in the ethylene unsaturated carboxylic acid ester copolymer may be one type, or two or more types.

The ethylene unsaturated carboxylic acid ester copolymer is preferably an ethylene methyl acrylate copolymer, an ethylene ethyl acrylate copolymer, an ethylene butyl acrylate copolymer, and an ethylene methyl methacrylate copolymer, and particularly an ethylene ethyl acrylate copolymer and an ethylene methyl methacrylate copolymer.

The acid anhydride-modified polyolefin resin is a polyolefin-based resin containing a structural unit derived from an unsaturated acid anhydrate. Examples of the unsaturated acid anhydrate include maleic anhydride, itaconic anhydride, citraconic anhydride, 2,3-dimethylmaleic anhydride, 2-norbomene-5, 6-dicarboxylic anhydride, and the like. Among these, maleic anhydride is preferable. Examples of the olefin-derived structural unit constituting the polyolefin resin include an ethylene unit, a propylene unit, a butylene unit, and the like, only one or two or more of the units may be contained.

In the present invention, a content ratio of the modifier (B) in the masterbatch is in a range from 4 to 85 parts by mass, and preferably from 6 to 55 parts by mass based on 100 parts by mass of a content of the non-modified polyolefin resin (A), since a polyolefin-based resin film excellent in transparency and an antifogging property is easily obtained.

In the present invention, the antifogging agent (C) is at least one selected from an alkylsulfonic acid alkali metal salt, an alkylarylsulfonic acid alkali metal salt, and an alkylsulfate alkali metal salt.

The alkylsulfonic acid alkali metal salt is preferably an alkali metal salt of an alkylsulfonic acid having an alkyl group composed of a hydrocarbon group derived from an aliphatic hydrocarbon.

The alkylsulfonic acid is usually a compound having an alkyl group having 6 or more carbon atoms, and example thereof includes hexylsulfonic acid, heptylsulfonic acid, octylsulfonic acid, nonylsulfonic acid, decylsulfonic acid, undecylsulfonic acid, dodecylsulfonic acid, tridecylsulfonic acid, tetradecylsulfonic acid, pentadecylsulfonic acid, hexadecylsulfonic acid, heptadecylsulfonic acid, octadecylsulfonic acid, nonadecylsulfonic acid, eicosylsulfonic acid, heneicosylsulfonic acid, docosylsulfonic acid, and the like.

The alkali metal atom constituting the alkali metal salt is lithium, sodium, or potassium, and preferably is sodium.

Specific examples of the alkylsulfonic acid alkali metal salt include lithium hexylsulfonate, sodium hexylsulfonate, potassium hexylsulfonate, lithium heptylsulfonate, sodium heptylsulfonate, potassium heptylsulfonate, lithium octylsulfonate, sodium octylsulfonate, potassium octylsulfonate, lithium nonylsulfonate, sodium nonylsulfonate, potassium nonylsulfonate, lithium decylsulfonate, sodium decylsulfonate, potassium decylsulfonate, lithium undecylsulfonate, sodium undecylsulfonate, potassium undecylsulfonate, lithium dodecylsulfonate, sodium dodecylsulfonate, lithium dodecylsulfonate, lithium tridecylsulfonate, sodium tridecylsulfonate, potassium tridecylsulfonate, lithium tetradecylsulfonate, sodium tetradecylsulfonate, potassium tetradecylsulfonate, lithium pentadecylsulfonate, sodium pentadecylsulfonate, potassium pentadecylsulfonate, lithium hexadecylsulfonate, sodium hexadecylsulfonate, potassium hexadecylsulfonate, lithium heptadecylsulfonate, sodium heptadecylsulfonate, potassium heptadecylsulfonate, lithium octadecylsulfonate, sodium octadecylsulfonate, potassium octadecylsulfonate, lithium nonadecylsulfonate, sodium nonadecylsulfonate, potassium nonadecylsulfonate, lithium eicosylsulfonate, sodium eicosylsulfonate, potassium eicosylsulfonate, lithium heneicosylsulfonate, sodium heneicosylsulfonate, potassium heneicosylsulfonate, lithium docosylsulfonate, sodium docosylsulfonate, potassium docosylsulfonate, and the like. When an antifogging agent containing an alkylsulfonic acid alkali metal salt in which the number of carbon atoms of the alkyl group is preferably 6 to 22 and more preferably 10 to 18 among these is used, effects of the present invention are more remarkable.

The alkylarylsulfonic acid alkali metal salt is an alkali metal salt of alkylarylsulfonic acid having a hydrocarbon group derived from a hydrocarbon containing an aromatic ring.

The alkylarylsulfonic acid is a compound containing an aromatic ring and having a hydrocarbon group having usually 7 or more carbon atoms, and example thereof includes an alkylbenzenesulfonic acid, an alkylnaphthalenesulfonic acid, and the like. Among these, examples of the alkylbenzenesulfonic acid include a monoalkylbenzenesulfonic acid such as hexylbenzenesulfonic acid, octylbenzenesulfonic acid, nonylbenzenesulfonic acid, decylbenzenesulfonic acid, undecylbenzenesulfonic acid, dodecylbenzenesulfonic acid, tridecylbenzenesulfonic acid, tetradecylbenzenesulfonic acid, pentadecylbenzenesulfonic acid, hexadecylbenzenesulfonic acid, heptadecylbenzenesulfonic acid, octadecylbenzenesulfonic acid, and behenylbenzenesulfonic acid; a dialkylbenzenesulfonic acid such as 2,4-dimethylbenzenesulfonic acid, 3,4-dimethylbenzenesulfonic acid, 2,6-dimethylbenzenesulfonic acid, 2,3-dimethylbenzenesulfonic acid, and diethylbenzene sulfonic acid; a trialkylbenzene sulfonic acid; a tetrabenesulfonic acid; and the like. Examples of the alkylnaphthalenesulfonic acid include methylnaphthalenesulfonic acid, ethylnaphthalenesulfonic acid, propylnaphthalenesulfonic acid, isopropylnaphthalenesulfonic acid, butylnaphthalenesulfonic acid, isobutylnaphthalenesulfonic acid, dimethylnaphthalenesulfonic acid, diethylnaphthalenesulfonic acid, diisopropylnaphthalenesulfonic acid, dibutylnaphthalenesulfonic acid, diisobutylnaphthalenesulfonic acid, methylnonylnaphthalenesulfonic acid, and the like.

Examples of the alkylarylsulfonic acid alkali metal salt include lithium hexylbenzenesulfonate, sodium hexylbenzenesulfonate, potassium hexylbenzenesulfonate, lithium octylbenzenesulfonate, sodium octylbenzenesulfonate, potassium octylbenzenesulfonate, lithium nonylbenzenesulfonate, sodium nonylbenzenesulfonate, potassium nonylbenzenesulfonate, lithium decylbenzenesulfonate, sodium decylbenzenesulfonate, potassium decylbenzenesulfonate, lithium undecylbenzenesulfonate, sodium undecylbenzenesulfonate, potassium undecylbenzenesulfonate, lithium dodecylbenzenesulfonate, sodium dodecylbenzenesulfonate, potassium dodecylbenzenesulfonate, lithium tridecylbenzenesulfonate, sodium tridecylbenzenesulfonate, potassium tridecylbenzenesulfonate, lithium tetradecylbenzenesulfonate, sodium tetradecylbenzenesulfonate, potassium tetradecylbenzenesulfonate, lithium pentadecylbenzenesulfonate, sodium pentadecylbenzenesulfonate, potassium pentadecylbenzenesulfonate, lithium hexadecylbenzenesulfonate, sodium hexadecylbenzenesulfonate, potassium hexadecylbenzenesulfonate, lithium heptadecylbenzenesulfonate, sodium heptadecylbenzenesulfonate, potassium heptadecylbenzenesulfonate, lithium octadecylbenzenesulfonate, sodium octadecylbenzenesulfonate, potassium octadecylbenzenesulfonate, lithium behenylbenzenesulfonate, sodium behenylbenzenesulfonate, potassium behenylbenzenesulfonate, lithium dibutylnaphthalenesulfonate, sodium dibutylnaphthalenesulfonate, potassium dibutylnaphthalenesulfonate, and the like. When an antifogging agent containing an alkylarylsulfonic acid alkali metal salt in which the number of carbon atoms of the alkylaryl group is preferably 7 to 22 and more preferably 15 to 20 among these is used, effects of the present invention are more remarkable.

The alkylsulfate alkali metal salt is a compound represented by a general formula of R⁵-O-SO₃M¹ (R⁵ is an alkyl group, and M¹ is an alkali metal atom). In this general formula, R⁵ is usually a hydrocarbon group that has 2 or more carbon atoms and is derived from an aliphatic hydrocarbon. M¹ is an alkali metal atom, preferably lithium, sodium or potassium, and particularly preferably sodium.

Examples of the alkylsulfate alkali metal salt include sodium ethyl sulfate, sodium propyl sulfate, sodium butyl sulfate, sodium hexyl sulfate, sodium octyl sulfate, sodium nonyl sulfate, sodium decyl sulfate, potassium decyl sulfate, sodium undecyl sulfate, sodium dodecyl sulfate, potassium dodecyl sulfate, lithium dodecyl sulfate, sodium tridecyl sulfate, sodium tetradecyl sulfate, sodium pentadecyl sulfate, sodium hexadecyl sulfate, sodium heptadecyl sulfate, sodium octadecyl sulfate, and the like. When a masterbatch containing an alkylsulfate alkali metal salt in which the number of carbon atoms of the alkyl group R⁵ is preferably 4 to 22 and more preferably 6 to 18 among these is used, effects of the present invention are more remarkable.

The antifogging agent (C) contained in the masterbatch of the present invention may be one type, or two or more types.

In the present invention, a content ratio of the antifogging agent (C) in the masterbatch is preferably in a range from 0.4 to 16.0 parts by mass, and more preferably from 0.6 to 15 parts by mass based on 100 parts by mass of a content of the non-modified polyolefin resin (A), since a polyolefin-based resin film excellent in transparency and an antifogging property is easily obtained.

The masterbatch of the present invention may contain conventionally publicly known other antifogging agents in addition to the antifogging agent (C) as necessary. Examples of other antifogging agents include a partial ester of an aliphatic carboxylic acid having 8 to 22 carbon atoms and a polyhydric alcohol, such as a partial ester of propylene glycol and lauric acid, a partial ester of propylene glycol and oleic acid, a partial ester of glycerin and lauric acid, a partial ester of glycerin and oleic acid, a partial esters of glycerin and stearic acid, a partial ester of glycerin and behenic acid, a partial ester of diglycerin and caprylic acid, a partial ester of diglycerin and lauric acid, a partial ester of diglycerin and oleic acid, a partial ester of diglycerin and stearic acid, a partial ester of sorbitan and lauric acid, a partial ester of sorbitan and stearic acid, a partial ester of sorbitan and oleic acid, a partial esters of tetraglycerin and lauric acid, a partial ester of stearic acid, a partial ester of tetraglycerin and oleic acid, and a partial ester of decaglycerin and oleic acid; and the like.

In the case where the masterbatch of the present invention contains other antifogging agents, an upper limit of a content ratio thereof is preferably 60 parts by mass and more preferably 40 parts by mass based on 100 parts by mass of the non-modified polyolefin resin (A).

The masterbatch of the invention may, as described above, contain an additive. Examples of the additive include an antioxidant, an ultraviolet absorber, a weathering agent, a heat stabilizer, an anti-blocking agent, an antistatic agent, a lubricant, a flame retardant, a neutralizing agent, and the like.

Examples of the antioxidant include a phenol-based compound, an amine-based compound, a sulfur-containing compound, a phosphorus-containing compound, and the like.

Examples of the ultraviolet absorber include a benzophenone-based compound, a benzotriazole-based compound, a triazine-based compound, a salicylic acid ester-based compound, and the like.

Examples of the antiblocking agent include an oxide such as silica, diatomaceous earth, alumina, iron oxide and ferrite; a silicate such as zeolite, talc, wollastonite, mica and clay; a crosslinked polymer such as a crosslinked polysilicone, a crosslinked polyamide, a crosslinked polytriazine, a crosslinked polyacrylic acid and a crosslinked polystyrene; and the like. In the case where the masterbatch of the present invention contains the antiblocking agent, a content ratio of the antiblocking agent is preferably in a range from 0.1 to 30.0 parts by mass based on 100 parts by mass of a content of the non-modified polyolefin resin (A).

Examples of the antistatic agent include a partial ester of propylene glycol and a fatty acid, a partial ester of glycerin and a fatty acid, a partial ester of diglycerin and a fatty acid, a partial ester of tetraglycerin and a fatty acid, a partial ester of sorbitan and a fatty acid, a higher alcohol sulfuric acid ester salt, a liquid fatty oil sulfuric acid ester salt, a sulfuric acid salt of an aliphatic amine and an aliphatic amide, an aliphatic alcohol phosphoric acid ester salt, a sulfonic acid salt of a dibasic fatty acid ester, an aliphatic amide sulfonic acid salt, an alkylsulfonic acid alkali metal salt, an alkylaryl sulfonic acid salt, a naphthaline sulfonic acid salt of formalin condensation, an aliphatic amine salt, a quaternary ammonium salt, an alkyl pyridinium salt, a polyoxyethylene alkyl ether, a polyoxyethylene alkylphenol ether, a polyoxyethylene alkyl ester, a sorbitan alkyl ester, a polyoxyethylene sorbitan alkyl ester, an imidazoline derivative, a betaine type higher alkylamino derivative, a sulfuric acid ester derivative, a phosphoric acid ester derivative, and the like.

Examples of the lubricant include a silane compound, a polyolefin-based wax, a fatty acid amide, and the like.

The masterbatch of the present invention can be produced by melt-kneading a composition containing the non-modified polyolefin resin (A), the modifier (B), and the antifogging agent (C), and then subjecting the melt-kneaded product to a conventionally publicly known extrusion method. Specific production methods are as follows.
(1) A method in which the non-modified polyolefin-based resin (A), the modifier (B), and the antifogging agent (C) are charged into a mixer such as a tumbler blender, a super mixer, and a Henschel mixer in advance and mixed, and the mixture is granulated while being melt-kneaded by an extruder such as a single screw extruder and a multi-screw extruder to obtain a masterbatch.
(2) A method in which a mixture of the non-modified polyolefin-based resin (A) and the modifier (B) is brought into a molten state by an extruder such as a single screw extruder and a multi-screw extruder, the antifogging agent (C) is fed by side feed or liquid injection to mix, and the mixture is granulated while being melt-kneaded to obtain a masterbatch.
(3) A method in which the non-modified polyolefin-based resin (A), the ethylene vinyl acetate copolymer (B), and the antifogging agent (C) are fed to an extruder such as a single screw extruder and a multi-screw extruder with a feeder, and the mixture is granulated while being melt-kneaded to obtain a masterbatch.
(4) A method in which the non-modified polyolefin-based resin (A) and the ethylene vinyl acetate copolymer (B) are fed to an extruder such as a single screw extruder and a multi-screw extruder with a feeder, the antifogging agent (C) is fed to the extruder by side feed or liquid injection, and the mixture is granulated while being melt-kneaded to obtain a masterbatch.

In the methods (1), (2), (3), and (4), when the polyolefin-based resin (A), the modifier (B), and the antifogging agent (C) are mixed, the mixer to be employed and the raw material feeding method to be employed may be selected depending on properties or the like of the polyolefin-based resin (A), the modifier (B), and the antifogging agent (C). When the raw material is solid, it is preferable to employ mixing by a mixer such as a tumbler blender, a super mixer, and a Henschel mixer; a feeder; or side feed. When the raw material is liquid, it is preferable to employ liquid injection or a mixer such as a super mixer and a Henschel mixer. The solid raw material may also be used as a liquid or a liquid-like material after being dissolved or dispersed in the liquid raw material.

A polyolefin-based resin film excellent in transparency and an antifogging property can be produced by subjecting the masterbatch of the present invention to film molding as it is or subjecting a composition containing the masterbatch in combination with other components (other masterbatch or the like). Therefore, the masterbatch of the present invention is suitable as a raw material for producing a polyolefin-based resin film excellent in transparency and an antifogging property.

The resin composition of the present invention is characterized by containing the masterbatch of the present invention. The resin composition of the present invention is suitable for production of a polyolefin-based resin film excellent in transparency and an antifogging property. In the case of producing such a polyolefin-based resin film, a resin composition composed only of the masterbatch of the present invention is used as it is, or a resin composition composed of a mixture containing the masterbatch of the present invention and other components is used.

The other components are not particularly limited and includes preferably a resin or a composition containing a resin and an additive (hereinafter, this mixture is referred to as "other composition"), and these may be only one type or two or more types.

The resin composition of the present invention is particularly preferably composed of the masterbatch of the present invention and other components.

The resin contained in the other components is preferably a thermoplastic resin having compatibility with the non-modified polyolefin resin (A) contained in the masterbatch of the present invention. Examples of such a thermoplastic resin include a non-modified polyolefin resin (A) that is the same as or different from that contained in the masterbatch of the present invention; a copolymer composed of a structural unit represented by the general formula (1) and a structural unit derived from at least one selected from an alicyclic vinyl compound and an aromatic vinyl compound, both of which are hydrocarbons; and the like. The resin contained in the other components may contain a modifier (B) that is the same as or different from the modifier (B) contained in the masterbatch of the present invention.

Examples of the additive include an antifogging agent, an antioxidant, an ultraviolet absorber, a weathering agent, a heat stabilizer, an anti-blocking agent, an antistatic agent, a lubricant, a flame retardant, a neutralizing agent, and the like. Examples of the antifogging agent include an antifogging agent (C) that is the same as or different from that contained in the masterbatch of the present invention, and other antifogging agents that may be incorporated in the masterbatch of the present invention.

When the resin composition of the present invention is composed of the masterbatch of the present invention and other components (such as a resin and other composition), and the resin contained in other components is the non-modified polyolefin resin (A), a content ratio of the modifier (B) derived from the masterbatch of the present invention is preferably in a range from 0.4 to 80 parts by mass, and more preferably from 0.4 to 45 parts by mass, based on 100 parts by mass of a total of the non-modified polyolefin resin (A) derived from the masterbatch of the present invention and the non-modified polyolefin resin (A) contained in the other components. A content of the antifogging agent (C) derived from the masterbatch of the present invention is preferably in a range from 0.03 to 6.00 parts by mass, and more preferably from 0.05 to 4.80 parts by mass based on 100 parts by mass of a total of the non-modified polyolefin resin (A) derived from the masterbatch of the present invention and the resin as the other components.

The polyolefin-based resin film of the present invention is a film excellent in transparency and an antifogging property, containing a non-modified polyolefin resin (A), a modifier (B), and an antifogging agent (C), which are the same as those contained in the masterbatch of the present invention. A content of the modifier (B) is in a range from 0.4 to 80 parts by mass, and more preferably 0.4 to 45 parts by mass based on 100 parts by mass of the non-modified polyolefin resin (A). A content of the antifogging agent (C) is preferably in a range from 0.03 to 6.00 parts by mass, and more preferably from 0.05 to 4.80 parts by mass based on 100 parts by mass of the non-modified polyolefin resin (A).

The polyolefin-based resin film of the present invention may contain other resins, an additive, and the like as necessary. The other resins include preferably a thermoplastic resin having compatibility with the non-modified polyolefin resin (A), and examples thereof include a copolymer composed of a structural unit represented by the general formula (1) and a structural unit derived from at least one selected from an alicyclic vinyl compound and an aromatic vinyl compound, both of which are hydrocarbons, and the like.

Examples of the additive include an antifogging agent except the antifogging agent (C), an antioxidant, an ultraviolet absorber, a weathering agent, a heat stabilizer, an anti-blocking agent, an antistatic agent, a lubricant, a flame retardant, a neutralizing agent, and the like.

A thickness of the polyolefin-based resin film of the present invention is not particularly limited, but is preferably in a range from 5 to 150 µm, and more preferably from 10 to 120 µm.

A production method of the polyolefin-based resin film of the present invention is not particularly limited. A method of subjecting a raw material composition containing the non-modified polyolefin resin (A), the modifier (B), and the antifogging agent (C) in proportions constituting a film to a film molding such as an extrusion method (inflation molding method, or T-die casting method), a calender molding method, and a press molding method can be applied.

In the present invention, the resin composition containing the masterbatch of the present invention is subjected to a film molding. Content ratios of the non-modified polyolefin resin (A), the modifier (B), and the antifogging agent (C) in this resin composition are usually the same as content ratios of the non-modified polyolefin resin (A), the modifier (B), and the antifogging agent (C) in the polyolefin-based resin film of the present invention. In the masterbatch of the present invention, the content ratios of the modifier (B) and the antifogging agent (C) to the non-modified polyolefin resin (A) can be both set to a wide range. Therefore, when at least one of the modifier (B) and the antifogging agent (C) has a high concentration in the masterbatch to be used, the resin composition is used as a product composed of such a masterbatch and other components (a resin or other composition), and the high-concentration component can be diluted with the other components to adjust the content ratio thereof to a specific range constituting the polyolefin-based resin film of the present invention. Various polyolefin-based resin films having different content ratios of the modifier (B) or the antifogging agent (C) can be efficiently produced by appropriately modifying the configuration of the other components to be used in combination with the masterbatch of the present invention.

Other methods of producing the polyolefin-based resin film of the present invention are exemplified below.
(i) A method using a resin composition including a masterbatch containing a non-modified polyolefin resin (A) and a modifier (B) but not containing an antifogging agent (C), and a masterbatch containing a non-modified polyolefin resin (A) and an antifogging agent (C) but not containing a modifier (B).
(ii) A method using a resin composition including a masterbatch containing a non-modified polyolefin resin (A) and an antifogging agent (C) and not containing a modifier (B), a modifier (B), and a masterbatch composed of a non-modified polyolefin resin (A) to be used in combination as necessary.
(iii) A method using a resin composition including a masterbatch containing a modifier (B) and an antifogging agent (C) and not containing a non-modified polyolefin resin (A) and a masterbatch containing a non-modified polyolefin resin (A).
(iv) A method using a resin composition including a masterbatch containing a non-modified polyolefin resin (A) and an antifogging agent (C) and not containing a modifier (B), and a modifier (B).

In the present invention, the production method of the a polyolefin-based resin film is preferably a method using a resin composition including a masterbatch containing a non-modified polyolefin resin (A), a modifier (B), and an antifogging agent (C), and the non-modified polyolefin resin (A), and a method using a resin composition including a masterbatch (hereinafter, referred to as "antifogging agent-containing masterbatch") containing a non-modified polyolefin resin (A) and an antifogging agent (C) and not containing a modifier (B), a modifier (B), and a non-modified polyolefin resin (A), in the above method (ii). The former method is particularly preferable.

In the antifogging agent-containing masterbatch, a content ratio of the antifogging agent (C) is preferably in a range from 0.4 to 16.0 parts by mass, and more preferably from 0.6 to 15.0 parts by mass based on 100 parts by mass of the non-modified polyolefin resin (A).

When the polyolefin-based resin film of the present invention is produced using the above resin composition, a conventionally publicly known film molding method can be applied. Examples of the method include inflation molding such as air-cooling inflation molding, air-cooling two-stage inflation molding, air-cooling three-stage inflation molding, and water-cooling inflation molding; T-die molding using a straight manifold type, a coat hanger type, a combination thereof, or the like as a T-die; calender molding; and the like. The polyolefin-based resin film of the present invention may be either unstretched or stretched. Examples of a stretching method in the case of forming a stretched film include a sequential biaxial stretching method, a simultaneous biaxial stretching method, a tubular biaxial stretching method, and the like.

In the present invention, after film formation by the above film molding, surface modification may be performed by a plasma treatment, a corona treatment, a flame treatment, a chemical liquid treatment with an acid or an alkali, or the like as necessary.

Next, the laminated film of the present invention is a film in which a resin layer (hereinafter, referred to as a "first resin layer") composed of the polyolefin-based resin film of the present invention and other layers are laminated.

Materials constituting the other layers are not particularly limited. The other layers may be made of either an organic material or an inorganic material, or may contain both materials. In addition, the number of the other layers may be one or two or more. In the case the other layers are of two or more layers, the other layers may be disposed only on one surface side of the first resin layer, or may be disposed on both surfaces of the first resin layer.

Examples of the other layers include other resin layers, adhesive layers, anchor coat layers, metal layers, and the like. The other layers are preferably layers containing a thermoplastic resin. Examples of the thermoplastic resin include a polyolefin-based resin such as a non-modified polyolefin resin, and a modified polyolefin resin; a polyester resin such as polyethylene terephthalate; a polyamide resin such as nylon 6; a polyvinyl alcohol; an ethylene vinyl alcohol; a styrene-based resin such as polystyrene; an acrylic resin such as polymethyl methacrylate; and the like.

The other layers may contain an additive such as a heat stabilizer, an antioxidant, a neutralizing agent, an antistatic agent, a lubricant, a weathering agent, an ultraviolet absorber, an anti-blocking agent, an antistatic agent, and an antifogging agent. When the other layers contain a metal layer, the layer may be aluminum layer or the like.

As described above, the number of the other layers in the laminated film of the present invention is one or two or more. Since the first resin layer usually has flexibility, the other layers can retain or improve the flexibility of the laminated film, or impart curl resistance, oxygen barrier properties, aroma retaining properties, and pinhole resistance to the laminated film. In order to achieve such an object, it is preferable to appropriately set the number of the other layers and the thickness of each layer according to the intended use of the laminated film.

A particularly preferable configuration of the laminated film of the present invention includes a first resin layer and other resin layers, and the other resin layers are two adjacent thermoplastic resin layers that are the same as or different from each other. When the adjacent thermoplastic resin layers are defined as a second resin layer and a third resin layer from the first resin layer side, a ratio among thicknesses of the first resin layer, the second resin layer, and the third resin layer in the three-layered laminated film is preferably 1: 1 to 10: 1 to 5, and more preferably 1: 1 to 5: 1 to 3. A total thickness of the three-layered laminated film is preferably in a range from 20 to 150 µm, and more preferably from 30 to 120 µm.

When transparency is imparted to the three-layer type laminated film, both the second resin layer and the third resin layer only have to be mainly composed of a thermoplastic resin having transparency, but, when the thermoplastic resin is a non-modified polyolefin resin (A) which is the same as or different from that contained in the first resin layer, an antifogging agent may be further contained in the second resin layer and the third resin layer. At this time, the antifogging agent may be the antifogging agent (C) contained in the first resin layer, or may be other antifogging agents. When the second resin layer and the third resin layer contain an antifogging agent, these resin layers may further contain a modifier.

The laminated film of the present invention can be produced by conventionally publicly known methods. The production method is appropriately selected depending on configurations of the other layers, the intended use of the laminated film, and the like. When the other layers are other resin layers, a lamination method, a co-extrusion method, or the like is preferably applied. Among them, examples of the lamination method include a dry lamination method, a sand lamination method, an extrusion lamination method, and the like. When the laminated film is produced by these lamination methods, lamination can be performed using a publicly known adhesive (a polyurethane-based adhesive, an organic titanium-based anchor coating agent, an isocyanate-based anchor coating agent, an adhesive resin, or the like), in a state where the adhesive is interposed between the polyolefin-based resin film and the resin films forming any other resin layer. In the case of the coextrusion method, a method of subjecting the resin composition of the present invention forming the first resin layer and a composition for forming any other resin layer (thermoplastic resin composition, when the number of other resin layers is 2 or more, a considerable number of types of thermoplastic resin compositions) to inflation molding or T-die molding can be used, and stretching may be performed as necessary.

Examples of the method of producing a laminated film when the other layer is a metal layer include a method in which the polyolefin-based resin film of the present invention and a metal foil are bonded with an adhesive, and a method in which metal vapor deposition is carried out on a surface of the polyolefin-based resin film of the present invention.

The polyolefin-based resin film of the present invention and the laminated film of the present invention are suitable as a packaging film for packaging an article. Particularly, after the polyolefin-based resin film of the present invention or the laminated film is packaged so that the polyolefin-based resin film or the first resin layer of the laminated film faces a side of a food (vegetable or the like) which is an article having a water-containing property or having moisture attached to a surface thereof, and placed and left in an atmosphere of 10°C or lower, water droplets are hardly observed on an inner surface of the film. Therefore, in such a case, visibility of the article is maintained, and a decrease in commercial value can be suppressed. It is presumed that such an antifogging property is obtained because the antifogging agent according to the present invention is retained near an outermost surface of the molded resin film.

### EXAMPLES

Hereinafter, in order to make the configuration and effects of the present invention more specific, Examples and the like are indicated, but the present invention is not limited to these Examples. In the following Examples and Comparative Examples, "%" and "parts" may mean "% by mass" and "parts by mass", respectively.

### 1. Raw material for production

Raw materials used for production of a masterbatch containing a non-modified polyolefin resin, a modifier, and an antifogging agent, and for production of a film containing these components are described.

### 1-1. Non-modified polyolefin resin (A)

### (A-1) Ethylene 1-butene copolymer

It is a copolymer having a 1-butene unit in an amount of 10%, a density of 0.920 g/cm³, and an MFR of 2.1 g/10 min at a temperature of 190°C and a load of 2.16 kgf.

### (A-2) Ethylene 1-hexene copolymer

It is a copolymer having a 1-hexene unit in an amount of 5%, a density of 0.936 g/cm³, and an MFR of 2.0 g/10 min at a temperature of 190°C and a load of 2.16 kgf.

### (A-3) Ethylene 1-octene copolymer

It is a copolymer having a 1-octene unit in an amount of 10%, a density of 0.931 g/cm³, and an MFR of 2.8 g/10 min at a temperature of 190°C and a load of 2.16 kgf.

### (A-4) Ethylene 1-hexene copolymer

It is a copolymer having a 1-hexene units in an amount of 10%, a density of 0.924 g/cm³, and an MFR of 2.0 g/10 min at a temperature of 190°C and a load of 2.16 kgf.

### (A-5) Ethylene 1-butene propylene copolymer

It is a copolymer having a 1-butene unit in an amount of 4% and a propylene unit in an amount of 96%, a density of 0.90 g/cm³ and an MFR of 7.0 g/10 min at a temperature of 190°C and a load of 2.16 kgf.

### 1-2. Modifier (B) and raw material (b-1) for Comparative Example

### (B-1) Ethylene vinyl acetate copolymer

It is a copolymer having a vinyl acetate unit in an amount of 15%, a density of 0.936 g/cm³, and an MFR of 2.0 g/10 min at a temperature of 190°C and a load of 2.16 kgf.

### (B-2) Ethylene vinyl acetate copolymer

It is a copolymer having a vinyl acetate unit in an amount of 6%, a density of 0.925 g/cm³, and an MFR of 2.0 g/10 min at a temperature of 190°C and a load of 2.16 kgf.

### (B-3) Ethylene vinyl acetate copolymer

It is a copolymer having a vinyl acetate unit in an amount of 25%, a density of 0.950 g/cm³, and an MFR of 2.0 g/10 min at a temperature of 190°C and a load of 2.16 kgf.

### (B-4) Ethylene methyl methacrylate copolymer

It is a copolymer having a methyl methacrylate unit in an amount of 10%, a density of 0.930 g/cm³ and an MFR of 2.0 g/10 min at a temperature of 190°C and a load of 2.16 kgf.

### (B-5) Ethylene ethyl acrylate copolymer

It is a copolymer having an ethyl acrylate unit in an amount of 10%, a density of 0.926 g/cm³, and an MFR of 3.0 g/10 min at a temperature of 190°C and a load of 2.16 kgf.

### (B-6) Maleic anhydride-modified polypropylene

"REO-070-1" (trade name) manufactured by Riken Vitamin Co., Ltd. was used.

### (b-1) Ionomer

"HIMILAN 1605" (trade name) manufactured by Du Pont-Mitsui Polychemicals Co., Ltd. was used.

### 1-3. Antifogging agent (C)

### 1-3-1. Alkylsulfonic acid alkali metal salt (C1)

C1-1: mixture of sodium alkylsulfonates having an alkyl group with 13 to 18 carbon atoms (mixture of six compounds, that is, mixture of sodium tridecylsulfonate having an alkyl group with 13 carbon atoms, sodium tetradecylsulfonate having an alkyl group with 14 carbon atoms, sodium pentadecylsulfonate having an alkyl group with 15 carbon atoms, sodium hexadecylsulfonate having an alkyl group with 16 carbon atoms, sodium heptadecylsulfonate having an alkyl group with 17 carbon atoms, and sodium octadecylsulfonate having an alkyl group with 18 carbon atoms. The same applies to the following.)

C1-2: mixture of sodium alkylsulfonates having an alkyl group with 10 to 16 carbon atoms (mixture of seven compounds)

### 1-3-2. Alkylarylsulfonic acid alkali metal salt (C2)

C2-1: mixture of sodium alkylbenzene sulfonates having an alkylaryl group with 15 to 20 carbon atoms (mixture of six compounds)

### 1-3-3. Alkylsulfate alkali metal salt (C3)

C3-1: mixture of sodium alkyl sulfates having an alkyl group with 6 to 18 carbon atoms

### (mixture of 13 compounds)

### 1-4. Other antifogging agent (D)

D-1: partial ester of diglycerin and lauric acid
D-2: partial ester of diglycerin and caprylic acid
D-3: partial ester of glycerin and oleic acid
D-4: partial ester of glycerin and behenic acid
D-5: partial ester of tetraglycerin and lauric acid
D-6: partial ester of decaglycerin and oleic acid
D-7: partial ester of sorbitan and lauric acid

### 2. Production of masterbatch

Hereinafter, production examples of a masterbatch which is a raw material for use in preparation of a polyolefin-based resin film containing a modifier and an antifogging agent (e.g., a masterbatch containing a non-modified polyolefin resin, a modifier, and an antifogging agent) will be described.

### Example 1-1

100 parts of the ethylene 1-butene copolymer (A-1), 14.3 parts of the ethylene vinyl acetate copolymer (B-1), and 8.6 parts of the antifogging agent (C1-1) were mixed in a tumbler. The mixture was then brought into a molten state at 220°C by a twin-screw extruder, 20 parts of the antifogging agent (D-1) was fed to the extruder including the molten mixture by liquid injection, and all the raw materials were melt-kneaded. Subsequently, the material was granulated to obtain a masterbatch (M-1) having a configuration shown in Table 1.

When the masterbatch was produced, the production stability (productivity) of the masterbatch was visually observed and evaluated according to the following criteria. The evaluation results are also shown in Table 1.

### <Criteria for determining masterbatch productivity>

1: No bent-up or violent motion of strand occurred during masterbatch production (very excellent production stability)
2: During masterbatch production, the traveling of the strand was disturbed in some cases, but no bent-up occurred (excellent production stability)
3: Violent motion of strand and bent-up occurred during masterbatch production (poor production stability)

### Example 1-2

100 parts of the ethylene 1-butene copolymer (A-1), 8 parts of the ethylene vinyl acetate copolymer (B-2), and 1.3 parts of the antifogging agent (C1-1) were mixed in a tumbler. The mixture was then brought into a molten state at 220°C by a twin-screw extruder, 5 parts of the antifogging agent (D-2) was fed to the extruder including the molten mixture by liquid injection, and all the raw materials were melt-kneaded. Subsequently, the material was granulated to obtain a masterbatch (M-2) having a configuration shown in Table 1. After that, the production stabilities (productivities) of the masterbatches were evaluated in the same manner as that in Example 1-1. The results are also shown in Table 1.

### Example 1-3

100 parts of the ethylene 1-hexene copolymer (A-2), 10 parts of the ethylene vinyl acetate copolymer (B-3), and 0.6 part of the antifogging agent (C1-1) were mixed in a tumbler. The mixture was then brought into a molten state at 220°C by a twin-screw extruder, 14.4 parts of the antifogging agent (D-3) was fed to the extruder including the molten mixture by liquid injection, and all the raw materials were melt-kneaded. Subsequently, the material was granulated to obtain a masterbatch (M-3) having a configuration shown in Table 1. After that, the production stabilities (productivities) of the masterbatches were evaluated in the same manner as that in Example 1-1. The results are also shown in Table 1.

### Example 1-4

100 parts of the ethylene 1-butene copolymer (A-1), 14.3 parts of the ethylene vinyl acetate copolymer (B-1), and 6 parts of the antifogging agent (C1-1) were mixed in a tumbler. The mixture was then brought into a molten state at 220°C by a twin-screw extruder, 4 parts of the antifogging agent (D-1) was fed to the extruder including the molten mixture by liquid injection, and all the raw materials were melt-kneaded. Subsequently, the material was granulated to obtain a masterbatch (M-4) having a configuration shown in Table 1. After that, the production stabilities (productivities) of the masterbatches were evaluated in the same manner as that in Example 1-1. The results are also shown in Table 1.

### Example 1-5

100 parts of the ethylene 1-octene copolymer (A-3), 53 parts of the ethylene vinyl acetate copolymer (B-4), 12 parts of the antifogging agent (C1-1) and 18 parts of the antifogging agent (D-4) were mixed in a tumbler. All the raw materials were melt-kneaded at a temperature of 220°C with a twin-screw extruder. Subsequently, the material was granulated to obtain a masterbatch (M-5) having a configuration shown in Table 1. After that, the production stabilities (productivities) of the masterbatches were evaluated in the same manner as that in Example 1-1. The results are also shown in Table 1.

### Example 1-6

100 parts of the ethylene 1-hexene copolymer (A-4), 30 parts of the ethylene vinyl acetate copolymer (B-5), and 8.6 parts of the antifogging agent (C1-2) were mixed in a tumbler. The mixture was then brought into a molten state at 220°C by a twin-screw extruder, 13 parts of the antifogging agent (D-5) was fed to the extruder including the molten mixture by liquid injection, and all the raw materials were melt-kneaded. Subsequently, the material was granulated to obtain a masterbatch (M-6) having a configuration shown in Table 1. After that, the production stabilities (productivities) of the masterbatches were evaluated in the same manner as that in Example 1-1. The results are also shown in Table 1.

### Example 1-7

100 parts of the ethylene 1-butene propylene copolymer (A-5), 15 parts of the maleic anhydride-modified polypropylene (B-6), and 2 parts of the antifogging agent (C2-1) were mixed in a tumbler. The mixture was then brought into a molten state at 220°C by a twin-screw extruder, 18 parts of the antifogging agent (D-6) was fed to the extruder including the molten mixture by liquid injection, and all the raw materials were melt-kneaded. Subsequently, the material was granulated to obtain a masterbatch (M-7) having a configuration shown in Table 1. After that, the production stabilities (productivities) of the masterbatches were evaluated in the same manner as that in Example 1-1. The results are also shown in Table 1.

### Example 1-8

100 parts of the ethylene 1-butene propylene copolymer (A-5), 18 parts of the maleic anhydride-modified polypropylene (B-6), and 2.9 parts of the antifogging agent (C3-1) were mixed in a tumbler. The mixture was then brought into a molten state at 220°C by a twin-screw extruder, 25.7 parts of the antifogging agent (D-7) was fed to the extruder including the molten mixture by liquid injection, and all the raw materials were melt-kneaded. Subsequently, the material was granulated to obtain a masterbatch (M-8) having a configuration shown in Table 1. After that, the production stabilities (productivities) of the masterbatches were evaluated in the same manner as that in Example 1-1. The results are also shown in Table 1.

### Comparative Example 1-1

100 parts of the ethylene 1-butene copolymer (A-1), 4.2 parts of the ethylene vinyl acetate copolymer (B-1), and 16.2 parts of the antifogging agent (C1-1) were mixed in a tumbler. The mixture was then brought into a molten state at 220°C by a twin-screw extruder, 37.8 parts of the antifogging agent (D-1) was fed to the extruder including the molten mixture by liquid injection, and all the raw materials were melt-kneaded. Subsequently, the material was granulated to obtain a masterbatch (m-1) having a configuration shown in Table 1. After that, the production stabilities (productivities) of the masterbatches were evaluated in the same manner as that in Example 1-1. The results are also shown in Table 1.

### Comparative Example 1-2

100 parts of the ethylene 1-butene copolymer (A-1) and 14.3 parts of the ethylene vinyl acetate copolymer (B-1) were mixed in a tumbler. A twin-screw extruder was then used to conduct melt-kneading at 220°C. Subsequently, the material was granulated to obtain a masterbatch (m-2) having a configuration shown in Table 1. After that, the production stabilities (productivities) of the masterbatches were evaluated in the same manner as that in Example 1-1. The results are also shown in Table 1.

### Comparative Example 1-3

100 parts of the ethylene 1-butene copolymer (A-1), 14.3 parts of the ethylene vinyl acetate copolymer (B-2), and 0.2 part of the antifogging agent (C1-1) were mixed in a tumbler. The mixture was then brought into a molten state at 220°C by a twin-screw extruder, 4.8 parts of the antifogging agent (D-1) was fed to the extruder including the molten mixture by liquid injection, and all the raw materials were melt-kneaded. Subsequently, the material was granulated to obtain a masterbatch (m-3) having a configuration shown in Table 1. After that, the production stabilities (productivities) of the masterbatches were evaluated in the same manner as that in Example 1-1. The results are also shown in Table 1.

### Comparative Example 1-4

100 parts of the ethylene 1-butene copolymer (A-1), 88.2 parts of the ethylene vinyl acetate copolymer (B-2), and 1.3 parts of the antifogging agent (C1-1) were mixed in a tumbler. The mixture was then brought into a molten state at 220°C by a twin-screw extruder, 20 parts of the antifogging agent (D-1) was fed to the extruder including the molten mixture by liquid injection, and all the raw materials were melt-kneaded. Subsequently, the material was granulated to obtain a masterbatch (m-4) having a configuration shown in Table 1. After that, the production stabilities (productivities) of the masterbatches were evaluated in the same manner as that in Example 1-1. The results are also shown in Table 1.

### Comparative Example 1-5

100 parts of the ethylene 1-butene copolymer (A-1), and 8.6 parts of the antifogging agent (C1-1) were mixed in a tumbler. The mixture was then brought into a molten state at 220°C by a twin-screw extruder, 20 parts of the antifogging agent (D-1) was fed to the extruder including the molten mixture by liquid injection, and all the raw materials were melt-kneaded. Subsequently, the material was granulated to obtain a masterbatch (m-5) having a configuration shown in Table 1. After that, the production stabilities (productivities) of the masterbatches were evaluated in the same manner as that in Example 1-1. The results are also shown in Table 1.

### Comparative Example 1-6

100 parts of the ethylene 1-butene copolymer (A-1), 3.5 parts of the ethylene vinyl acetate copolymer (B-2), and 8.6 parts of the antifogging agent (C1-1) were mixed in a tumbler. The mixture was then brought into a molten state at 220°C by a twin-screw extruder, 20 parts of the antifogging agent (D-1) was fed to the extruder including the molten mixture by liquid injection, and all the raw materials were melt-kneaded. Subsequently, the material was granulated to obtain a masterbatch (m-6) having a configuration shown in Table 1. After that, the production stabilities (productivities) of the masterbatches were evaluated in the same manner as that in Example 1-1. The results are also shown in Table 1.

### Comparative Example 1-7

100 parts of the ethylene 1-butene copolymer (A-1), 14.3 parts of the ionomer (b-1), and 8.6 parts of the antifogging agent (C1-1) were mixed in a tumbler. The mixture was then brought into a molten state at 220°C by a twin-screw extruder, 20 parts of the antifogging agent (D-1) was fed to the extruder including the molten mixture by liquid injection, and all the raw materials were melt-kneaded. Subsequently, the material was granulated to obtain a masterbatch (m-7) having a configuration shown in Table 1. After that, the production stabilities (productivities) of the masterbatches were evaluated in the same manner as that in Example 1-1. The results are also shown in Table 1.

**[Table 1]**

| | | Masterbatch | | | | | | | | | Masterbatch productivity |
|---|---|---|---|---|---|---|---|---|---|---|---|
| | | Type | Raw material | | | | | | | | |
| | | | Non-modified polyolefin resin (A) | | Modifier (B) | | Antifogging agent (C) | | Antifogging agent (D) | | |
| | | | Type | Content (parts) | Type | Content (parts) | Type | Content (parts) | Type | Content (parts) | |
| Example | 1-1 | M-1 | A-1 | 100 | B-1 | 14.3 | C1-1 | 8.6 | D-1 | 20.0 | 1 |
| | 1-2 | M-2 | A-1 | 100 | B-2 | 8 | C1-1 | 1.3 | D-2 | 5.0 | 1 |
| | 1-3 | M-3 | A-2 | 100 | B-3 | 10 | C1-1 | 0.6 | D-3 | 14.4 | 1 |
| | 1-4 | M-4 | A-1 | 100 | B-1 | 14.3 | C1-1 | 6.0 | D-1 | 4.0 | 1 |
| | 1-5 | M-5 | A-3 | 100 | B-4 | 53 | C1-1 | 12.0 | D-4 | 18.0 | 1 |
| | 1-6 | M-6 | A-4 | 100 | B-5 | 30 | C1-2 | 8.6 | D-5 | 13.0 | 1 |
| | 1-7 | M-7 | A-5 | 100 | B-6 | 15 | C2-1 | 2.0 | D-6 | 18.0 | 2 |
| | 1-8 | M-8 | A-5 | 100 | B-6 | 18 | C3-1 | 2.9 | D-7 | 25.7 | 2 |
| Comparative Example | 1-1 | m-1 | A-1 | 100 | B-1 | 4.2 | C1-1 | 16.2 | D-1 | 37.8 | 3 |
| | 1-2 | m-2 | A-1 | 100 | B-1 | 14.3 | - | - | - | - | 1 |
| | 1-3 | m-3 | A-1 | 100 | B-2 | 14.3 | C1-1 | 0.2 | D-1 | 4.8 | 1 |
| | 1-4 | m-4 | A-1 | 100 | B-2 | 88.2 | C1-1 | 1.3 | D-1 | 20.0 | 3 |
| | 1-5 | m-5 | A-1 | 100 | - | - | C1-1 | 8.6 | D-1 | 20.0 | 3 |
| | 1-6 | m-6 | A-1 | 100 | B-2 | 3.5 | C1-1 | 8.6 | D-1 | 20.0 | 3 |
| | 1-7 | m-7 | A-1 | 100 | b-1 | 14.3 | C1-1 | 8.6 | D-1 | 20.0 | 3 |

### 3. Production (1) of polyolefin-based resin film

Polyolefin-based resin films were obtained using the masterbatches shown in Table 1 and a non-modified polyolefin resin.

### Example 2-1

5 parts of the masterbatch (M-1) obtained in Example 1-1 and 95 parts of a non-modified polyolefin resin composed of an ethylene 1-butene copolymer (A-1) were mixed in a tumbler. Subsequently, the mixture was melted at 190°C by an inflation molding machine and extruded while being air-cooled in an environment of 20°C to produce a polyolefin-based resin film (F-1) having a thickness of 40 µm (see Table 2).

The film-forming behavior of the polyolefin-based resin film was visually observed and the dimension thereof was measured, and the film-forming stability (film-forming property) was evaluated according to the following criteria. The results are shown in Table 2.

### <Criteria for determining film-forming property>

1: No extrusion variation occurred during film formation, and film thickness unevenness was ± 5 µm with respect to a set thickness (very excellent film-forming stability)
2: A slight extrusion variation occurred during film formation, but the film thickness unevenness was ± 5 µm with respect to the set thickness (excellent film-forming stability)
3: Streaks and film thickness unevenness due to extrusion variation occurred during film formation (poor film-forming stability)

The resulting polyolefin-based resin film was evaluated for antifogging property and transparency by the following methods. The results are shown in Table 2.

### (1) Antifogging property

The polyolefin-based resin film was placed under conditions of a temperature of 20°C and a relative humidity of 65% for 24 hours to adjust humidity, and then covered on an opening surface of a beaker containing water at 20°C. Subsequently, in this state, the film was placed in an atmosphere at 5°C for 24 hours, a degree of attachment of water droplets to the beaker-coating surface was observed, and the antifogging property was evaluated according to the following criteria.

### <Criteria for determining antifogging property>

1: No water droplet was attached, and the film was transparent (remarkably excellent antifogging property)
2: Large water droplets were attached, but the film was transparent (excellent antifogging property).
3: A large number of small water droplets were attached, and the film was opaque (poor antifogging property).

### (2) Transparency

The polyolefin-based resin film was placed under conditions of a temperature of 20°C and a relative humidity of 65% for 24 hours to adjust humidity. Then, a haze was measured using a haze meter "NDH-5000" (model name) manufactured by Nippon Denshoku Industries Co., Ltd., and transparency was evaluated according to the following criteria.

### <Criteria for determining transparency>

1: The haze was less than 5% (excellent transparency)
2: The haze was 5% or higher and lower than 10% (good transparency)
3: The haze was 10% or higher (poor transparency)

### Example 2-2

20 parts of the masterbatch (M-2) obtained in Example 1-2 and 80 parts of a non-modified polyolefin resin composed of an ethylene 1-butene copolymer (A-1) were mixed in a tumbler. Subsequently, the mixture was melted at 190°C by an inflation molding machine and extruded while being air-cooled in an environment of 20°C to produce a polyolefin-based resin film (F-2) having a thickness of 30 µm (see Table 2).

After that, the film was evaluated in the same manner as in Example 2-1. The results are shown in Table 2.

### Example 2-3

15 parts of the masterbatch (M-3) obtained in Example 1-3 and 75 parts of a non-modified polyolefin resin composed of an ethylene 1-hexene copolymer (A-2) were mixed in a tumbler. Subsequently, the mixture was melted at 190°C by an inflation molding machine and extruded while being air-cooled in an environment of 20°C to produce a polyolefin-based resin film (F-3) having a thickness of 20 µm (see Table 2).

After that, the film was evaluated in the same manner as in Example 2-1. The results are shown in Table 2.

### Example 2-4

10 parts of the masterbatch (M-4) obtained in Example 1-4 and 90 parts of a non-modified polyolefin resin composed of an ethylene 1-butene copolymer (A-1) were mixed in a tumbler. Subsequently, the mixture was melted at 190°C by an inflation molding machine and extruded while being air-cooled in an environment of 20°C to produce a polyolefin-based resin film (F-4) having a thickness of 40 µm (see Table 2).

After that, the film was evaluated in the same manner as in Example 2-1. The results are shown in Table 2.

### Example 2-5

30 parts of the masterbatch (M-5) obtained in Example 1-5 and 70 parts of a non-modified polyolefin resin composed of an ethylene 1-hexene copolymer (A-3) were mixed in a tumbler. Subsequently, the mixture was melted at 190°C by an inflation molding machine and extruded while being air-cooled in an environment of 20°C to produce a polyolefin-based resin film (F-5) having a thickness of 10 µm (see Table 2).

After that, the film was evaluated in the same manner as in Example 2-1. The results are shown in Table 2.

### Example 2-6

3 parts of the masterbatch (M-6) obtained in Example 1-6 and 97 parts of a non-modified polyolefin resin composed of an ethylene 1-hexene copolymer (A-4) were mixed in a tumbler. Subsequently, the mixture was melted at 190°C by an inflation molding machine and extruded while being air-cooled in an environment of 20°C to produce a polyolefin-based resin film (F-6) having a thickness of 120 µm (see Table 2).

After that, the film was evaluated in the same manner as in Example 2-1. The results are shown in Table 2.

### Example 2-7

7 parts of the masterbatch (M-7) obtained in Example 1-7 and 93 parts of a non-modified polyolefin resin composed of an ethylene 1-butene propylene copolymer (A-5) were mixed in a tumbler. Subsequently, the mixture was melted at 190°C by an inflation molding machine and extruded while being air-cooled in an environment of 20°C to produce a polyolefin-based resin film (F-7) having a thickness of 40 µm (see Table 2).

After that, the film was evaluated in the same manner as in Example 2-1. The results are shown in Table 2.

### Example 2-8

5 parts of the masterbatch (M-8) obtained in Example 1-8 and 95 parts of a non-modified polyolefin resin composed of an ethylene 1-butene propylene copolymer (A-5) were mixed in a tumbler. Subsequently, the mixture was melted at 190°C by an inflation molding machine and extruded while being air-cooled in an environment of 20°C to produce a polyolefin-based resin film (F-8) having a thickness of 40 µm (see Table 2).

After that, the film was evaluated in the same manner as in Example 2-1. The results are shown in Table 2.

### Comparative Example 2-1

10 parts of the masterbatch (m-1) obtained in Comparative Example 1-1 and 90 parts of a non-modified polyolefin resin composed of an ethylene 1-butene copolymer (A-1) were mixed in a tumbler. Subsequently, the mixture was melted at 190°C by an inflation molding machine and extruded while being air-cooled in an environment of 20°C to produce a polyolefin-based resin film (f-1) having a thickness of 40 µm (see Table 2).

After that, the film was evaluated in the same manner as in Example 2-1. The results are shown in Table 2.

### Comparative Example 2-2

5 parts of the masterbatch (m-2) obtained in Comparative Example 1-2 and 95 parts of a non-modified polyolefin resin composed of an ethylene 1-butene copolymer (A-1) were mixed in a tumbler. Subsequently, the mixture was melted at 190°C by an inflation molding machine and extruded while being air-cooled in an environment of 20°C to produce a polyolefin-based resin film (f-1) having a thickness of 40 µm (see Table 2).

After that, the film was evaluated in the same manner as in Example 2-1. The results are shown in Table 2.

### Comparative Example 2-3

5 parts of the masterbatch (m-3) obtained in Comparative Example 1-3 and 95 parts of a non-modified polyolefin resin composed of an ethylene 1-butene copolymer (A-1) were mixed in a tumbler. Subsequently, the mixture was melted at 190°C by an inflation molding machine and extruded while being air-cooled in an environment of 20°C to produce a polyolefin-based resin film (f-3) having a thickness of 40 µm (see Table 2).

After that, the film was evaluated in the same manner as in Example 2-1. The results are shown in Table 2.

### Comparative Example 2-4

3 parts of the masterbatch (m-4) obtained in Comparative Example 1-4 and 97 parts of a non-modified polyolefin resin composed of an ethylene 1-butene copolymer (A-1) were mixed in a tumbler. Subsequently, the mixture was melted at 190°C by an inflation molding machine and extruded while being air-cooled in an environment of 20°C to produce a polyolefin-based resin film (f-4) having a thickness of 40 µm (see Table 2).

After that, the film was evaluated in the same manner as in Example 2-1. The results are shown in Table 2.

### Comparative Example 2-5

5 parts of the masterbatch (m-5) obtained in Comparative Example 1-5 and 95 parts of a non-modified polyolefin resin composed of an ethylene 1-butene copolymer (A-1) were mixed in a tumbler. Subsequently, the mixture was melted at 190°C by an inflation molding machine and extruded while being air-cooled in an environment of 20°C to produce a polyolefin-based resin film (f-5) having a thickness of 40 µm (see Table 2).

After that, the film was evaluated in the same manner as in Example 2-1. The results are shown in Table 2.

### Comparative Example 2-6

5 parts of the masterbatch (m-6) obtained in Comparative Example 1-6 and 95 parts of a non-modified polyolefin resin composed of an ethylene 1-butene copolymer (A-1) were mixed in a tumbler. Subsequently, the mixture was melted at 190°C by an inflation molding machine and extruded while being air-cooled in an environment of 20°C to produce a polyolefin-based resin film (f-6) having a thickness of 40 µm (see Table 2).

After that, the film was evaluated in the same manner as in Example 2-1. The results are shown in Table 2.

### Comparative Example 2-7

5 parts of the masterbatch (m-7) obtained in Comparative Example 1-7 and 95 parts of a non-modified polyolefin resin composed of an ethylene 1-butene copolymer (A-1) were mixed in a tumbler. Subsequently, the mixture was melted at 190°C by an inflation molding machine and extruded while being air-cooled in an environment of 20°C to produce a polyolefin-based resin film (f-7) having a thickness of 40 µm (see Table 2).

After that, the film was evaluated in the same manner as in Example 2-1. The results are shown in Table 2.

**[Table 2]**

| | | Film | Raw material for production | | | | Main composition of film | | | | | Thickness (µm) | Evaluation | | |
|---|---|---|---|---|---|---|---|---|---|---|---|---|---|---|---|
| | | | Masterbatch | | Non-modified polyolefin resin | | Non-modified polyolefin resin (A) | Modifier (B) | | Antifogging agent (C) | | | Film-forming property | Antifogging property | Transparency |
| | | | Type | Used (%) | Type | Used (%) | Content (parts) | Type | Content (parts) | Type | Content (parts) | | | | |
| Example | 2-1 | F-1 | M-1 | 5 | A-1 | 95 | 100 | B-1 | 0.5 | C1-1 | 0.30 | 40 | 1 | 1 | 1 |
| | 2-2 | F-2 | M-2 | 20 | A-1 | 80 | 100 | B-2 | 1.4 | C1-1 | 0.23 | 30 | 1 | 1 | 1 |
| | 2-3 | F-3 | M-3 | 15 | A-2 | 85 | 100 | B-3 | 1.2 | C1-1 | 0.07 | 20 | 1 | 1 | 1 |
| | 2-4 | F-4 | M-4 | 10 | A-1 | 90 | 100 | B-1 | 1.2 | C1-1 | 0.49 | 40 | 1 | 1 | 1 |
| | 2-5 | F-5 | M-5 | 30 | A-3 | 70 | 100 | B-4 | 10.1 | C1-1 | 2.28 | 10 | 1 | 1 | 2 |
| | 2-6 | F-6 | M-6 | 3 | A-4 | 97 | 100 | B-5 | 0.6 | C1-2 | 0.17 | 120 | 1 | 1 | 2 |
| | 2-7 | F-7 | M-7 | 7 | A-5 | 93 | 100 | B-6 | 0.8 | C2-1 | 0.11 | 40 | 2 | 1 | 2 |
| | 2-8 | F-8 | M-8 | 5 | A-5 | 95 | 100 | B-6 | 0.6 | C3-1 | 0.10 | 40 | 2 | 1 | 2 |
| Comparative Example | 2-1 | f-1 | m-1 | 10 | A-1 | 90 | 100 | B-1 | 0.3 | C1-1 | 1.06 | 40 | 3 | 1 | 2 |
| | 2-2 | f-2 | m-2 | 5 | A-1 | 95 | 100 | B-1 | 0.6 | - | 0 | 40 | 1 | 3 | 1 |
| | 2-3 | f-3 | m-3 | 5 | A-1 | 95 | 100 | B-2 | 0.6 | C1-1 | 0.01 | 40 | 1 | 3 | 1 |
| | 2-4 | f-4 | m-4 | 3 | A-1 | 97 | 100 | B-2 | 1.3 | C1-1 | 0.02 | 40 | 3 | 2 | 3 |
| | 2-5 | f-5 | m-5 | 5 | A-1 | 95 | 100 | - | 0.0 | C1-1 | 0.34 | 40 | 3 | 2 | 2 |
| | 2-6 | f-6 | m-6 | 5 | A-1 | 95 | 100 | B-2 | 0.1 | C1-1 | 0.33 | 40 | 3 | 1 | 2 |
| | 2-7 | f-7 | m-7 | 5 | A-1 | 95 | 100 | b-1 | 0.5 | C1-1 | 0.30 | 40 | 3 | 2 | 3 |

### 4. Production of masterbatch containing antifogging agent and not containing modifier

Hereinafter, production examples of a masterbatch which is a raw material for use in preparation of a polyolefin-based resin film containing a modifier and an antifogging agent (e.g., a masterbatch not containing a modifier and containing a non-modified polyolefin resin and an antifogging agent) will be described.

### Preparation Example 1

100 parts of the ethylene 1-butene copolymer (A-1) and 5.3 parts of the antifogging agent (C1-1) were mixed in a tumbler. The mixture was then brought into a molten state at 220°C by a twin-screw extruder, 12.3 parts of the antifogging agent (D-1) was fed to the extruder including the molten mixture by liquid injection, and all the raw materials were melt-kneaded. Subsequently, the mixture was granulated to obtain a masterbatch (M-9) having a configuration shown in Table 3.

### Preparation Example 2

100 parts of the ethylene 1-butene copolymer (A-1) and 3.5 parts of the antifogging agent (C1-1) were mixed in a tumbler. The mixture was then brought into a molten state at 220°C by a twin-screw extruder, 14.1 parts of the antifogging agent (D-2) was fed to the extruder including the molten mixture by liquid injection, and all the raw materials were melt-kneaded. Subsequently, the mixture was granulated to obtain a masterbatch (M-10) having a configuration shown in Table 3.

### Preparation Example 3

100 parts of the ethylene 1-hexene copolymer (A-2) and 1.2 parts of the antifogging agent (C1-1) were mixed in a tumbler. The mixture was then brought into a molten state at 220°C by a twin-screw extruder, 28.8 parts of the antifogging agent (D-3) was fed to the extruder including the molten mixture by liquid injection, and all the raw materials were melt-kneaded. Subsequently, the mixture was granulated to obtain a masterbatch (M-11) having a configuration shown in Table 3.

### Preparation Example 4

100 parts of the ethylene 1-butene copolymer (A-1) and 5.5 parts of the antifogging agent (C1-1) were mixed in a tumbler. The mixture was then brought into a molten state at 220°C by a twin-screw extruder, 5.5 parts of the antifogging agent (D-1) was fed to the extruder including the molten mixture by liquid injection, and all the raw materials were melt-kneaded. Subsequently, the mixture was granulated to obtain a masterbatch (M-12) having a configuration shown in Table 3.

### Preparation Example 5

100 parts of the ethylene 1-octene copolymer (A-3), 14.4 parts of the antifogging agent (C1-1), and 21.6 parts of the antifogging agent (D-4) were mixed in a tumbler. Then, all the raw materials were melt-kneaded by a twin-screw extruder at 220°C. Subsequently, the mixture was granulated to obtain a masterbatch (M-13) having a configuration shown in Table 3.

### Preparation Example 6

100 parts of the ethylene 1-hexene copolymer (A-4) and 4.4 parts of the antifogging agent (C1-2) were mixed in a tumbler. The mixture was then brought into a molten state at 220°C by a twin-screw extruder, 6.7 parts of the antifogging agent (D-5) was fed to the extruder including the molten mixture by liquid injection, and all the raw materials were melt-kneaded. Subsequently, the mixture was granulated to obtain a masterbatch (M-14) having a configuration shown in Table 3.

### Preparation Example 7

100 parts of the ethylene 1-butene propylene copolymer (A-5) and 1.1 parts of the antifogging agent (C2-1) were mixed in a tumbler. The mixture was then brought into a molten state at 220°C by a twin-screw extruder, 10 parts of the antifogging agent (D-6) was fed to the extruder including the molten mixture by liquid injection, and all the raw materials were melt-kneaded. Subsequently, the mixture was granulated to obtain a masterbatch (M-15) having a configuration shown in Table 3.

### Preparation Example 8

100 parts of the ethylene 1-butene copolymer (A-1) and 1.1 parts of the antifogging agent (C3-1) were mixed in a tumbler. The mixture was then brought into a molten state at 220°C by a twin-screw extruder, 10 parts of the antifogging agent (D-7) was fed to the extruder including the molten mixture by liquid injection, and all the raw materials were melt-kneaded. Subsequently, the mixture was granulated to obtain a masterbatch (M-16) having a configuration shown in Table 3.

**[Table 3]**

| | Masterbatch | | | | | | |
|---|---|---|---|---|---|---|---|
| | Type | Raw material | | | | | |
| | | Non-modified polyolefin resin (A) | | Antifogging agent (C) | | Antifogging agent (D) | |
| | | Type | Content (parts) | Type | Content (parts) | Type | Content (parts) |
| Preparation example 1 | M-9 | A-1 | 100 | C1-1 | 5.3 | D-1 | 12.3 |
| Preparation example 2 | M-10 | A-1 | 100 | C1-1 | 3.5 | D-2 | 14.1 |
| Preparation Example 3 | M-11 | A-2 | 100 | C1-1 | 1.2 | D-3 | 28.8 |
| Preparation Example 4 | M-12 | A-1 | 100 | C1-1 | 5.5 | D-1 | 5.5 |
| Preparation Example 5 | M-13 | A-3 | 100 | C1-1 | 14.4 | D-4 | 21.6 |
| Preparation Example 6 | M-14 | A-4 | 100 | C1-2 | 4.4 | D-5 | 6.7 |
| Preparation Example 7 | M-15 | A-5 | 100 | C2-1 | 1.1 | D-6 | 10.0 |
| Preparation Example 8 | M-16 | A-1 | 100 | C3-1 | 1.1 | D-7 | 10.0 |

### 5. Production (2) of polyolefin-based resin film

Polyolefin-based resin films were obtained using the masterbatches shown in Table 4, a non-modified polyolefin resin, and a modifier.

### Example 3-1

6 parts of the masterbatch (M-9) obtained in Preparation Example 1, 90 parts of a non-modified polyolefin resin composed of the ethylene 1-butene polymer (A-1), and 4 parts of the ethylene vinyl acetate copolymer (B-1) as a modifier were mixed in a tumbler. The mixture was then melted at 190°C by an inflation molding machine and extruded while being air-cooled in an environment of 20°C to produce a polyolefin-based resin film (FF-1) with a thickness of 40 µm and having a configuration shown in Table 4.

The resulting polyolefin-based resin film was evaluated for film-forming property, antifogging property, and transparency in the same manner as those in Example 2-1. The results are also shown in Table 4.

### Example 3-2

6 parts of the masterbatch (M-10) obtained in Preparation Example 2, 79 parts of a non-modified polyolefin resin composed of the ethylene 1-butene polymer (A-1), and 15 parts of the ethylene vinyl acetate copolymer (B-2) as a modifier were mixed in a tumbler. The mixture was then melted at 190°C by an inflation molding machine and extruded while being air-cooled in an environment of 20°C to produce a polyolefin-based resin film (FF-2) having a thickness of 30 µm (see Table 4).

After that, the film-forming property, antifogging property, and transparency were evaluated in the same manner as described above. The results are also shown in Table 4.

### Example 3-3

8 parts of the masterbatch (M-11) obtained in Preparation Example 3, 62 parts of a non-modified polyolefin resin composed of the ethylene 1-hexene polymer (A-2), and 30 parts of the ethylene vinyl acetate copolymer (B-3) as a modifier were mixed in a tumbler. The mixture was then melted at 190°C by an inflation molding machine and extruded while being air-cooled in an environment of 20°C to produce a polyolefin-based resin film (FF-3) having a thickness of 20 µm (see Table 4).

After that, the film-forming property, antifogging property, and transparency were evaluated in the same manner as described above. The results are also shown in Table 4.

### Example 3-4

15 parts of the masterbatch (M-12) obtained in Preparation Example 4, 65 parts of a non-modified polyolefin resin composed of the ethylene 1-butene polymer (A-1), and 20 parts of the ethylene vinyl acetate copolymer (B-1) as a modifier were mixed in a tumbler. The mixture was then melted at 190°C by an inflation molding machine and extruded while being air-cooled in an environment of 20°C to produce a polyolefin-based resin film (FF-4) having a thickness of 40 µm (see Table 4).

After that, the film-forming property, antifogging property, and transparency were evaluated in the same manner as described above. The results are also shown in Table 4.

### Example 3-5

35 parts of the masterbatch (M-13) obtained in Preparation Example 5, 55 parts of a non-modified polyolefin resin composed of the ethylene 1-octene polymer (A-3), and 10 parts of the ethylene methyl mechacrylate copolymer (B-4) as a modifier were mixed in a tumbler. The mixture was then melted at 190°C by an inflation molding machine and extruded while being air-cooled in an environment of 20°C to produce a polyolefin-based resin film (FF-5) having a thickness of 10 µm (see Table 4).

After that, the film-forming property, antifogging property, and transparency were evaluated in the same manner as described above. The results are also shown in Table 4.

### Example 3-6

6 parts of the masterbatch (M-14) obtained in Preparation Example 6, 90 parts of a non-modified polyolefin resin composed of the ethylene 1-hexene polymer (A-4), and 4 parts of the ethylene ethyl acrylate copolymer (B-5) as a modifier were mixed in a tumbler. The mixture was then melted at 190°C by an inflation molding machine and extruded while being air-cooled in an environment of 20°C to produce a polyolefin-based resin film (FF-6) having a thickness of 120 µm (see Table 4).

After that, the film-forming property, antifogging property, and transparency were evaluated in the same manner as described above. The results are also shown in Table 4.

### Example 3-7

6 parts of the masterbatch (M-15) obtained in Preparation Example 7, 90 parts of a non-modified polyolefin resin composed of the ethylene 1-butene propylene polymer (A-5), and 4 parts of the maleic anhydride-modified polypropylene (B-6) as a modifier were mixed in a tumbler. The mixture was then melted at 190°C by an inflation molding machine and extruded while being air-cooled in an environment of 20°C to produce a polyolefin-based resin film (FF-7) having a thickness of 40 µm (see Table 4).

After that, the film-forming property, antifogging property, and transparency were evaluated in the same manner as described above. The results are also shown in Table 4.

### Example 3-8

6 parts of the masterbatch (M-16) obtained in Preparation Example 8, 90 parts of a non-modified polyolefin resin composed of the ethylene 1-butene propylene polymer (A-5), and 4 parts of the maleic anhydride-modified polypropylene (B-6) as a modifier were mixed in a tumbler. The mixture was then melted at 190°C by an inflation molding machine and extruded while being air-cooled in an environment of 20°C to produce a polyolefin-based resin film (FF-8) having a thickness of 40 µm (see Table 4).

After that, the film-forming property, antifogging property, and transparency were evaluated in the same manner as described above. The results are also shown in Table 4.

### Comparative Example 3-1

6 parts of the masterbatch (M-9) obtained in Preparation Example 1, 49 parts of a non-modified polyolefin resin composed of the ethylene 1-butene polymer (A-1), and 45 parts of the ethylene vinyl acetate copolymer (B-1) as a modifier were mixed in a tumbler. The mixture was then melted at 190°C by an inflation molding machine and extruded while being air-cooled in an environment of 20°C to produce a polyolefin-based resin film (ff-1) having a thickness of 40 µm (see Table 4).

After that, the film-forming property, antifogging property, and transparency were evaluated in the same manner as described above. The results are also shown in Table 4.

### Comparative Example 3-2

6 parts of the masterbatch (M-9) obtained in Preparation Example 1 and 94 parts of a non-modified polyolefin resin composed of the ethylene 1-butene polymer (A-1) were mixed in a tumbler. The mixture was then melted at 190°C by an inflation molding machine and extruded while being air-cooled in an environment of 20°C to produce a polyolefin-based resin film (ff-2) containing no modifiers with a thickness of 40 µm (see Table 4).

After that, the film-forming property, antifogging property, and transparency were evaluated in the same manner as described above. The results are also shown in Table 4.

### Comparative Example 3-3

6 parts of the masterbatch (M-9) obtained in Preparation Example 1, 93.7 parts of a non-modified polyolefin resin composed of the ethylene 1-butene polymer (A-1), and 0.3 part of the ethylene vinyl acetate copolymer (B-1) as a modifier were mixed in a tumbler. The mixture was then melted at 190°C by an inflation molding machine and extruded while being air-cooled in an environment of 20°C to produce a polyolefin-based resin film (ff-3) having a thickness of 40 µm (see Table 4).

After that, the film-forming property, antifogging property, and transparency were evaluated in the same manner as described above. The results are also shown in Table 4.

### Comparative Example 3-4

6 parts of the masterbatch (M-9) obtained in Preparation Example 1, 90 parts of a non-modified polyolefin resin composed of the ethylene 1-butene polymer (A-1), and 4 parts of the ionomer (b-1) as a modifier were mixed in a tumbler. The mixture was then melted at 190°C by an inflation molding machine and extruded while being air-cooled in an environment of 20°C to produce a polyolefin-based resin film (ff-4) having a thickness of 40 µm (see Table 4).

After that, the film-forming property, antifogging property, and transparency were evaluated in the same manner as described above. The results are also shown in Table 4.

### Comparative Example 3-5

50 parts of the masterbatch (M-13) obtained in Preparation Example 5, 46 parts of a non-modified polyolefin resin composed of the ethylene 1-butene polymer (A-1), and 4 parts of the ethylene vinyl acetate copolymer (B-1) as a modifier were mixed in a tumbler. The mixture was then melted at 190°C by an inflation molding machine and extruded while being air-cooled in an environment of 20°C to produce a polyolefin-based resin film (ff-5) having a thickness of 40 µm (see Table 4).

After that, the film-forming property, antifogging property, and transparency were evaluated in the same manner as described above. The results are also shown in Table 4.

### Comparative Example 3-6

96 parts of a non-modified polyolefin resin composed of the ethylene 1-butene polymer (A-1), and 4 parts of the ethylene vinyl acetate copolymer (B-2) as a modifier were mixed in a tumbler. The mixture was then melted at 190°C by an inflation molding machine and extruded while being air-cooled in an environment of 20°C to produce a polyolefin-based resin film (ff-6) having a thickness of 40 µm (see Table 4).

After that, the film-forming property, antifogging property, and transparency were evaluated in the same manner as described above. The results are also shown in Table 4.

### Comparative Example 3-7

0.5 part of the masterbatch (M-9) obtained in Preparation Example 1, 95.5 parts of a non-modified polyolefin resin composed of the ethylene 1-butene polymer (A-1), and 4 parts of the ionomer (b-1) as a modifier were mixed in a tumbler. The mixture was then melted at 190°C by an inflation molding machine and extruded while being air-cooled in an environment of 20°C to produce a polyolefin-based resin film (ff-7) having a thickness of 40 µm (see Table 4).

After that, the film-forming property, antifogging property, and transparency were evaluated in the same manner as described above. The results are also shown in Table 4.

### [Table 4]

**[Table 4]**

| | | Film | Raw material for production | | | | | | Main composition of film | | | | | Thickness (µm) | Evaluation | | |
|---|---|---|---|---|---|---|---|---|---|---|---|---|---|---|---|---|---|
| | | | Masterbatch | | Modifier | | Non-modified polyolefin resin | | Non-modified polyolefin resin (A) | Modifier (B) | | Antifogging agent (C) | | | Film-forming property | Antifogging property | Transparency |
| | | | Type | Used (%) | Type | Used (%) | Type | Used (%) | Content (parts) | Type | Content (parts) | Type | Content (parts) | | | | |
| Example | 3-1 | FF-1 | M-9 | 6 | B-1 | 4 | A-1 | 90 | 100 | B-1 | 4.21 | C1-1 | 0.28 | 40 | 1 | 1 | 1 |
| | 3-2 | FF-2 | M-10 | 6 | B-2 | 15 | A-1 | 79 | 100 | B-2 | 17.84 | C1-1 | 0.21 | 30 | 1 | 1 | 1 |
| | 3-3 | FF-3 | M-11 | 8 | B-3 | 30 | A-2 | 62 | 100 | B-3 | 44.02 | C1-1 | 0.11 | 20 | 1 | 1 | 1 |
| | 3-4 | FF-4 | M-12 | 15 | B-1 | 20 | A-1 | 65 | 100 | B-1 | 25.47 | C1-1 | 0.95 | 40 | 1 | 1 | 1 |
| | 3-5 | FF-5 | M-13 | 35 | B-4 | 10 | A-3 | 55 | 100 | B-4 | 12.39 | C1-1 | 4.59 | 10 | 1 | 2 | 2 |
| | 3-6 | FF-6 | M-14 | 6 | B-5 | 4 | A-4 | 90 | 100 | B-5 | 4.19 | C1-2 | 0.25 | 120 | 1 | 2 | 2 |
| | 3-7 | FF-7 | M-15 | 6 | B-6 | 4 | A-5 | 90 | 100 | B-6 | 4.19 | C2-1 | 0.06 | 40 | 2 | 2 | 2 |
| | 3-8 | FF-8 | M-16 | 6 | B-6 | 4 | A-5 | 90 | 100 | B-6 | 4.19 | C3-1 | 0.06 | 40 | 2 | 2 | 2 |
| Comparative Example | 3-1 | ff-1 | M-9 | 6 | B-1 | 45 | A-1 | 49 | 100 | B-1 | 83.18 | C1-1 | 0.50 | 40 | 1 | 3 | 3 |
| | 3-2 | ff-2 | M-9 | 6 | - | 0 | A-1 | 94 | 100 | - | - | C1-1 | 0.27 | 40 | 3 | 1 | 1 |
| | 3-3 | ff-3 | M-9 | 6 | B-1 | 0.3 | A-1 | 93.7 | 100 | B-1 | 0.30 | C1-1 | 0.27 | 40 | 3 | 1 | 1 |
| | 3-4 | ff-4 | M-9 | 6 | b-1 | 4 | A-1 | 90 | 100 | b-1 | 4.21 | C1-1 | 0.28 | 40 | 3 | 2 | 3 |
| | 3-5 | ff-5 | M-13 | 50 | B-1 | 4 | A-1 | 46 | 100 | B-1 | 4.83 | C1-1 | 6.40 | 40 | 3 | 2 | 3 |
| | 3-6 | ff-6 | - | 0 | B-2 | 4 | A-1 | 96 | 100 | B-2 | 4.17 | - | - | 40 | 1 | 3 | 1 |
| | 3-7 | ff-7 | M-9 | 0.5 | b-1 | 4 | A-1 | 95.5 | 100 | b-1 | 4.17 | C1-1 | 0.02 | 40 | 3 | 3 | 2 |

As is apparent from Table 4, the polyolefin-based resin films (FF-1) to (FF-8) according to Examples 3-1 to 3-8 in which the modifier and the antifogging agent according to the present invention are contained at specific content ratios with respect to the non-modified polyolefin resin were excellent in antifogging property and transparency.

### 6. Production of laminated film

Laminated films having a three-layer structure including a first resin layer containing an antifogging agent and a modifier, a second resin layer (intermediate layer) which might contain an antifogging agent and a modifier, and a third resin layer in this order were obtained using the masterbatches shown in Table 3, a non-modified polyolefin resin, and a modifier.

### Example 4-1

As a molding material for the first resin layer, a mixture obtained by mixing 20 parts of the masterbatch (M-9), 76 parts of the ethylene 1-butene copolymer (A-1), and 4 parts of the ethylene vinyl acetate copolymer (B-1) using a tumbler was used. As a molding material for each of the second resin layer (intermediate layer) and the third resin layer, only the ethylene 1-butene copolymer (A-1) was used (see Table 5).

Using these molding materials, the mixture was melted at 190°C by an inflation molding machine, and co-extruded in an environment of 20°C to produce a laminated film (G-1) having a total thickness of 40 µm in which the first resin layer, the second resin layer (intermediate layer), and the third resin layer had the configurations shown in Table 6, and the thicknesses of the respective resin layers were 10 µm, 20 µm, and 10 µm.

The film-forming property of the produced laminated film was evaluated in the same manner as those in Example 2-1. In addition, the antifogging property and transparency were evaluated. The evaluation results are also shown in Table 6.

### (1) Antifogging property

The laminated film was placed under conditions of a temperature of 20°C and a relative humidity of 65% for 24 hours to adjust humidity, and then the first resin layer surface was covered on an opening surface of a beaker containing water at 20°C. Subsequently, in this state, the film was placed in an atmosphere at 5°C for 24 hours, a degree of attachment of water droplets to the beaker-coating surface (e.g., first resin layer surface) was observed, and the antifogging property was evaluated according to the following criteria.

### <Criteria for determining antifogging property>

1: No water droplet was attached, and the film was transparent (remarkably excellent antifogging property)
2: Large water droplets were attached, but the film was transparent (excellent antifogging property).
3: A large number of small water droplets were attached, and the film was opaque (poor antifogging property).

### (2) Transparency

The laminated film was placed under conditions of a temperature of 20°C and a relative humidity of 65% for 24 hours to adjust humidity. Then, a haze was measured using a haze meter "NDH-5000" (model name) manufactured by Nippon Denshoku Industries Co., Ltd., and transparency was evaluated according to the following criteria.

### <Criteria for determining transparency>

1: The haze was less than 10% (excellent transparency)
2: The haze was 10% or higher and lower than 15% (good transparency)
3: The haze was 15% or higher (poor transparency)

### Example 4-2

A laminated film (G-2) having thicknesses of a first resin layer, a second resin layer (intermediate resin layer), and a third resin layer of 10 µm, 20 µm, and 10 µm, respectively, was obtained in the same manner as those in Example 4-1 except that a mixture obtained by mixing 20 parts of the masterbatch (M-10), 65 parts of the ethylene 1-butene copolymer (A-1), and 15 parts of the ethylene vinyl acetate copolymer (B-2) using a tumbler was used as a molding material for the first resin layer; and only the ethylene 1-butene copolymer (A-1) was used as a molding material for each of the second resin layer (intermediate layer) and the third resin layer (see Tables 5 and 6). After that, the film-forming property, antifogging property, and transparency were evaluated. The results are also shown in Table 6.

### Example 4-3

A laminated film (G-3) having thicknesses of a first resin layer, a second resin layer (intermediate layer), and a third resin layer of 20 µm, 20 µm, and 20 µm, respectively, was obtained in the same manner as those in Example 4-1 except that a mixture obtained by mixing 10 parts of the masterbatch (M-11), 60 parts of the ethylene 1-hexene copolymer (A-2), and 30 parts of the ethylene vinyl acetate copolymer (B-3) using a tumbler was used as a molding material for the first resin layer; a mixture obtained by mixing 10 parts of the masterbatch (M-11), 80 parts of the ethylene 1-hexene copolymer (A-2), and 10 parts of the ethylene vinyl acetate copolymer (B-1) using a tumbler was used as a molding material for the second resin layer (intermediate layer); and only the ethylene 1-hexene copolymer (A-2) was used as a molding material for the third resin layer (see Tables 5 and 6). After that, the film-forming property, antifogging property, and transparency were evaluated. The results are also shown in Table 6.

### Example 4-4

A laminated film (G-4) having thicknesses of a first resin layer, a second resin layer (intermediate layer), and a third resin layer of 20 µm, 20 µm, and 20 µm, respectively, was obtained in the same manner as those in Example 4-1 except that a mixture obtained by mixing 25 parts of the masterbatch (M-12), 70 parts of the ethylene 1-butene copolymer (A-1), and 5 parts of the ethylene vinyl acetate copolymer (B-1) using a tumbler was used as a molding material for the first resin layer; and only the ethylene 1-butene copolymer (A-1) was used as a molding material for each of the second resin layer (intermediate layer) and the third resin layer (see Tables 5 and 6). After that, the film-forming property, antifogging property, and transparency were evaluated. The results are also shown in Table 6.

### Example 4-5

A laminated film (G-5) having thicknesses of a first resin layer, a second resin layer (intermediate layer), and a third resin layer of 20 µm, 20 µm, and 20 µm, respectively, was obtained in the same manner as those in Example 4-1 except that a mixture obtained by mixing 8 parts of the masterbatch (M-13), 82 parts of the ethylene 1-octene copolymer (A-3), and 10 parts of the ethylene methyl methacrylate copolymer (B-4) using a tumbler was used as a molding material for the first resin layer; and only the ethylene 1-octene copolymer (A-3) was used as a molding material for each of the second resin layer (intermediate layer) and the third resin layer (see Tables 5 and 6). After that, the film-forming property, antifogging property, and transparency were evaluated. The results are also shown in Table 6.

### Example 4-6

A laminated film (G-6) having thicknesses of a first resin layer, a second resin layer (intermediate layer), and a third resin layer of 20 µm, 70 µm, and 30 µm, respectively, was obtained in the same manner as those in Example 4-1 except that a mixture obtained by mixing 20 parts of the masterbatch (M-14), 76 parts of the ethylene hexene copolymer (A-4), and 4 parts of the ethylene ethyl acrylate copolymer (B-5) using a tumbler was used as a molding material for the first resin layer; a mixture obtained by mixing 5 parts of the masterbatch (M-14), 71 parts of the ethylene hexene copolymer (A-4), and 24 parts of the ethylene vinyl acetate copolymer (B-1) using a tumbler was used as a molding material for the second resin layer (intermediate layer); and only the ethylene hexene copolymer (A-4) was used as a molding material for the third resin layer (see Tables 5 and 6). After that, the film-forming property, antifogging property, and transparency were evaluated. The results are also shown in Table 6.

### Example 4-7

A laminated film (G-7) having thicknesses of a first resin layer, a second resin layer (intermediate layer), and a third resin layer of 10 µm, 20 µm, and 30 µm, respectively, was obtained in the same manner as those in Example 4-1 except that a mixture obtained by mixing 30 parts of the masterbatch (M-15), 66 parts of the ethylene 1-butene propylene copolymer (A-5), and 4 parts of the maleic anhydride-modified polypropylene (B-6) using a tumbler was used as a molding material for the first resin layer; a mixture obtained by mixing 15 parts of the masterbatch (M-15), 75 parts of the ethylene 1-butene propylene copolymer (A-5), and 10 parts of the ethylene vinyl acetate copolymer (B-1) using a tumbler was used as a molding material for the second resin layer (intermediate layer); and only the ethylene 1-butene copolymer (A-1) was used as a molding material for the third resin layer (see Tables 5 and 6). After that, the film-forming property, antifogging property, and transparency were evaluated. The results are also shown in Table 6.

### Example 4-8

A laminated film (G-8) having thicknesses of a first resin layer, a second resin layer (intermediate layer), and a third resin layer of 10 µm, 20 µm, and 10 µm, respectively, was obtained in the same manner as those in Example 4-1 except that a mixture obtained by mixing 30 parts of the masterbatch (M-16), 66 parts of the ethylene 1-butene propylene copolymer (A-5), and 4 parts of the maleic anhydride-modified polypropylene (B-6) using a tumbler was used as a molding material for the first resin layer; and only the ethylene 1-butene copolymer (A-1) was used as a molding material for each of the second resin layer (intermediate layer) and the third resin layer (see Tables 5 and 6). After that, the film-forming property, antifogging property, and transparency were evaluated. The results are also shown in Table 6.

### Comparative Example 4-1

A laminated film (g-1) having thicknesses of a first resin layer, a second resin layer (intermediate layer), and a third resin layer of 10 µm, 20 µm, and 10 µm, respectively, was obtained in the same manner as those in Example 4-1 except that a mixture obtained by mixing 20 parts of the masterbatch (M-9), 35 parts of the ethylene 1-butene copolymer (A-1), and 45 parts of the ethylene vinyl acetate copolymer (B-1) using a tumbler was used as a molding material for the first resin layer; and only the ethylene 1-butene copolymer (A-1) was used as a molding material for each of the second resin layer (intermediate layer) and the third resin layer (see Tables 5 and 6). After that, the film-forming property, antifogging property, and transparency were evaluated. The results are also shown in Table 6.

### Comparative Example 4-2

A laminated film (g-2) having thicknesses of a first resin layer, a second resin layer (intermediate layer), and a third resin layer of 10 µm, 20 µm, and 10 µm, respectively, was obtained in the same manner as those in Example 4-1 except that a mixture obtained by mixing 20 parts of the masterbatch (M-9) and 80 parts of the ethylene 1-butene copolymer (A-1) using a tumbler was used as a molding material for the first resin layer; and only the ethylene 1-butene copolymer (A-1) was used as a molding material for each of the second resin layer (intermediate layer) and the third resin layer (see Tables 5 and 6). After that, the film-forming property, antifogging property, and transparency were evaluated. The results are also shown in Table 6.

### Comparative Example 4-3

A laminated film (g-3) having thicknesses of a first resin layer, a second resin layer (intermediate layer), and a third resin layer of 10 µm, 20 µm, and 10 µm, respectively, was obtained in the same manner as those in Example 4-1 except that a mixture obtained by mixing 20 parts of the masterbatch (M-9), 79.7 parts of the ethylene 1-butene copolymer (A-1), and 0.3 part of the ethylene vinyl acetate copolymer (B-1) using a tumbler was used as a molding material for the first resin layer; and only the ethylene 1-butene copolymer (A-1) was used as a molding material for each of the second resin layer (intermediate layer) and the third resin layer (see Tables 5 and 6). After that, the film-forming property, antifogging property, and transparency were evaluated. The results are also shown in Table 6.

### Comparative Example 4-4

A laminated film (g-4) having thicknesses of a first resin layer, a second resin layer (intermediate layer), and a third resin layer of 10 µm, 20 µm, and 10 µm, respectively, was obtained in the same manner as those in Example 4-1 except that a mixture obtained by mixing 20 parts of the masterbatch (M-9), 76 parts of the ethylene 1-butene copolymer (A-1), and 4 parts of the ionomer (b-1) using a tumbler was used as a molding material for the first resin layer; and only the ethylene 1-butene copolymer (A-1) was used as a molding material for each of the second resin layer (intermediate layer) and the third resin layer (see Tables 5 and 6). After that, the film-forming property, antifogging property, and transparency were evaluated. The results are also shown in Table 6.

### Comparative Example 4-5

A laminated film (g-5) having thicknesses of a first resin layer, a second resin layer (intermediate layer), and a third resin layer of 10 µm, 20 µm, and 10 µm, respectively, was obtained in the same manner as those in Example 4-1 except that a mixture obtained by mixing 50 parts of the masterbatch (M-13), 46 parts of the ethylene 1-butene copolymer (A-1), and 4 parts of the ethylene vinyl acetate copolymer (B-1) using a tumbler was used as a molding material for the first resin layer; and only the ethylene 1-butene copolymer (A-1) was used as a molding material for each of the second resin layer (intermediate layer) and the third resin layer (see Tables 5 and 6). After that, the film-forming property, antifogging property, and transparency were evaluated. The results are also shown in Table 6.

### Comparative Example 4-6

A laminated film (g-6) having thicknesses of a first resin layer, a second resin layer (intermediate layer), and a third resin layer of 10 µm, 20 µm, and 10 µm, respectively, was obtained in the same manner as those in Example 4-1 except that a mixture obtained by mixing 96 parts of the ethylene 1-butene copolymer (A-1) and 4 parts of the ethylene vinyl acetate copolymer (B-1) using a tumbler was used as a molding material for the first resin layer; and only the ethylene 1-butene copolymer (A-1) was used as a molding material for each of the second resin layer (intermediate layer) and the third resin layer (see Tables 5 and 6). After that, the film-forming property, antifogging property, and transparency were evaluated. The results are also shown in Table 6.

**[Table 5]**

| | | Laminated film | | | | | | | | | | | | | | |
|---|---|---|---|---|---|---|---|---|---|---|---|---|---|---|---|---|
| | | Type | First resin layer | | | | | | Second resin layer (intermediate layer) | | | | | | Third resin layer | |
| | | | Raw material for production | | | | | | Raw material for production | | | | | | Raw material for production | |
| | | | Masterbatch | | Modifier | | Non-modified polyolefin resin | | Masterbatch | | Modifier | | Non-modified polyolefin resin | | Non-modified polyolefin resin | |
| | | | Type | Used (%) | Type | Used (%) | Type | Used (%) | Type | Used (%) | Type | Used (%) | Type | Used (%) | Type | Used (%) |
| Example | 4-1 | G-1 | M-9 | 20 | B-1 | 4 | A-1 | 76 | - | - | - | - | A-1 | 100 | A-1 | 100 |
| | 4-2 | G-2 | M-10 | 20 | B-2 | 15 | A-1 | 65 | - | - | - | - | A-1 | 100 | A-1 | 100 |
| | 4-3 | G-3 | M-11 | 10 | B-3 | 30 | A-2 | 60 | M-11 | 10 | B-1 | 10 | A-2 | 80 | A-2 | 100 |
| | 4-4 | G-4 | M-12 | 25 | B-1 | 5 | A-1 | 70 | - | - | - | - | A-1 | 100 | A-1 | 100 |
| | 4-5 | G-5 | M-13 | 8 | B-4 | 10 | A-3 | 82 | - | - | - | - | A-3 | 100 | A-3 | 100 |
| | 4-6 | G-6 | M-14 | 20 | B-5 | 4 | A-4 | 76 | M-14 | 5 | B-1 | 24 | A-4 | 71 | A-4 | 100 |
| | 4-7 | G-7 | M-15 | 30 | B-6 | 4 | A-5 | 66 | M-15 | 15 | B-1 | 10 | A-5 | 75 | A-1 | 100 |
| | 4-8 | G-8 | M-16 | 30 | B-6 | 4 | A-5 | 66 | - | - | - | - | A-1 | 100 | A-1 | 100 |
| Comparative Example | 4-1 | g-1 | M-9 | 20 | B-1 | 45 | A-1 | 35 | - | - | - | - | A-1 | 100 | A-1 | 100 |
| | 4-2 | g-2 | M-9 | 20 | - | 0 | A-1 | 80 | - | - | - | - | A-1 | 100 | A-1 | 100 |
| | 4-3 | g-3 | M-9 | 20 | B-1 | 0.3 | A-1 | 79.7 | - | - | - | - | A-1 | 100 | A-1 | 100 |
| | 4-4 | g-4 | M-9 | 20 | b-1 | 4 | A-1 | 76 | - | - | - | - | A-1 | 100 | A-1 | 100 |
| | 4-5 | g-5 | M-13 | 50 | B-1 | 4 | A-1 | 46 | - | - | - | - | A-1 | 100 | A-1 | 100 |
| | 4-6 | g-6 | - | - | B-1 | 4 | A-1 | 96 | - | - | - | - | A-1 | 100 | A-1 | 100 |

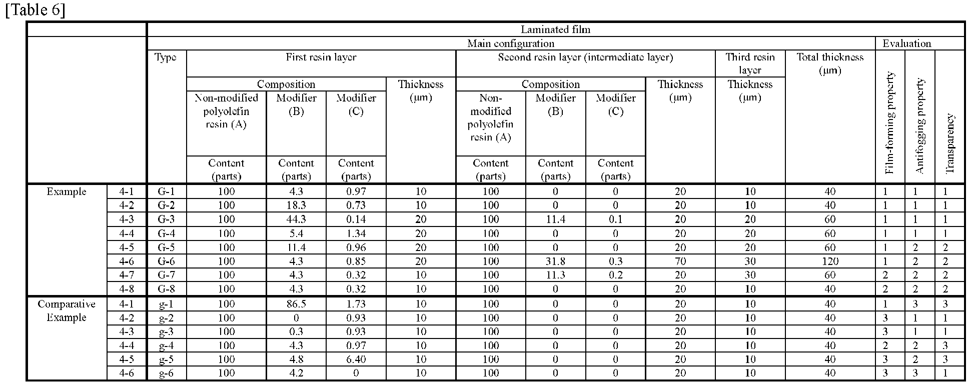

As is apparent from Table 6, the laminated films (G-1) to (G-8) having the first resin layer composed of the polyolefin-based resin film of the present invention excellent in antifogging property and transparency were excellent in antifogging property and transparency.

### INDUSTRIAL APPLICABILITY

When the resin composition containing the masterbatch of the present invention is used, a polyolefin-based resin film excellent in antifogging property and transparency can be efficiently produced. Since the polyolefin-based resin film and the laminated film of the present invention are excellent in antifogging property and transparency, and therefore these films are suitable for packaging materials for foods and the like.

## Claims

1. A masterbatch comprising a non-modified polyolefin resin, a modifier, and an antifogging agent, **characterized in that** the modifier is at least one selected from a group consisting of an ethylene vinyl acetate copolymer, an ethylene unsaturated carboxylic acid ester copolymer, and a modified polyolefin resin with an unsaturated acid anhydrate, that the antifogging agent is at least one selected from a group consisting of an alkylsulfonic acid alkali metal salt, an alkylarylsulfonic acid alkali metal salt, and an alkylsulfate alkali metal salt, that a content of the modifier is in a range from 4 to 85 parts by mass based on 100 parts by mass of the non-modified polyolefin resin, and that a content of the antifogging agent is in a range from 0.4 to 16.0 parts by mass based on 100 parts by mass of the non-modified polyolefin resin.

2. A resin composition **characterized by** comprising the masterbatch according to Claim 1.

3. A method of producing a polyolefin-based resin film **characterized by** subjecting the resin composition according to Claim 2 to a film molding.

4. A polyolefin-based resin film comprising a non-modified polyolefin resin, a modifier, and an antifogging agent, **characterized in that** the modifier is at least one selected from a group consisting of an ethylene vinyl acetate copolymer, an ethylene unsaturated carboxylic acid ester copolymer, and a modified polyolefin resin with an unsaturated acid anhydrate, that the antifogging agent is at least one selected from a group consisting of an alkylsulfonic acid alkali metal salt, an alkylarylsulfonic acid alkali metal salt, and an alkylsulfate alkali metal salt, that a content of the modifier is in a range from 0.4 to 80 parts by mass based on 100 parts by mass of the non-modified polyolefin resin, and that a content of the antifogging agent is in a range from 0.03 to 6.00 parts by mass based on 100 parts by mass of the non-modified polyolefin resin.

5. A laminated film **characterized by** laminating a resin layer consisting of the polyolefin-based resin film according to Claim 4 and other layers.
